# EUROPÄISCHE PATENTSCHRIFT

(11) **EP 4 019 452 B1**
(45) Veröffentlichungstag und Bekanntmachung des Hinweises auf die Patenterteilung: **07.06.2023**
(21) Anmeldenummer: 21211409.4
(22) Anmeldetag: 30.11.2021
(51) Int. Cl.: B66C 21/00

(54) **LASTENTRANSPORTANLAGE ZUM TRANSPORTIEREN EINER LAST IN EINEM ARBEITSRAUM**
LOAD TRANSPORT SYSTEM FOR TRANSPORTING A LOAD IN A WORKING AREA
INSTALLATION DE TRANSPORT DES CHARGES PERMETTANT DE TRANSPORTER UNE CHARGE DANS UN ESPACE DE TRAVAIL

(30) Priorität: 23.12.2020 AT 2822020
(43) Veröffentlichungstag der Anmeldung: 29.06.2022
(73) Patentinhaber: Hans Künz GmbH, 6971 Hard (Vbg.) (AT)
(72) Erfinder: Klapper, Georg, 6971 Hard (AT); Lang, Robert, 6020 Innsbruck (AT); Eberharter, Johannes Karl, 6822 Satteins (AT); Beer, Roman, 6850 Dornbirn (AT)
(74) Vertreter: Torggler & Hofmann Patentanwälte - Rankweil

(56) Entgegenhaltungen:
- DE-A1-102009 050 729
- SU-A1- 557 988

## Beschreibung

Die Erfindung betrifft eine Lastentransportanlage zum Transportieren einer Last in einem Arbeitsraum, wobei die Lastentransportanlage einen Lastenträger und zumindest eine am Lastenträger befestigte Lastaufnahmevorrichtung zur Aufnahme der Last und zumindest drei Positionierseile und zumindest drei voneinander distanziert angeordnete Aufhängevorrichtungen aufweist, wobei jede Aufhängevorrichtung zumindest eine Positionierseilwinde zum Auf- und Abwickeln eines der Positionierseile aufweist und der Lastenträger mittels der Positionierseile an den Aufhängevorrichtungen hängt, wobei der Lastenträger und die daran befestigte Lastaufnahmevorrichtung durch Betätigen der Positionierseilwinden im und/oder über dem Arbeitsraum verfahrbar sind.

Bei Lastentransportanlagen dieser Art ist der Lastenträger mittels Positionierseilen an räumlich verteilt und voneinander distanziert angeordneten Aufhängevorrichtungen aufgehängt. Durch entsprechendes Auf- und Abwickeln der Positionierseile an den jeweiligen Positionierseilwinden kann der Lastenträger in einem Bereich zwischen den Aufhängevorrichtungen hin und her bewegt werden, um so an der Lastaufnahmevorrichtung und damit am Lastenträger hängende Lasten im Bereich zwischen den Aufhängevorrichtungen von einem Ort zu einem anderen Ort transportieren zu können.

Eine gattungsgemäße Lastentransportanlage ist in der DE 10 2009 050 729 A1 gezeigt. Als Lastenträger ist dort eine lasttragfähige Plattform mit einem rechteckigen Grundriss vorgesehen. An den jeweiligen Ecken dieser Plattform sind die Positionierseile befestigt. Als Lastaufnahmevorrichtung sind in der DE 10 2009 050 729 A1 an der Plattform fixierte Greifwerkzeuge vorgesehen. SU 557 988 A1 offenbart den Oberbegriff von Anspruch 1.

Ein Problem der in der DE 10 2009 050 729 A1 gezeigten Technologie besteht darin, dass in einem zentralen Bereich zwischen den Aufhängevorrichtungen die am Lastenträger bzw. an der Lastaufnahmevorrichtung befestigten Lasten zwar sehr gut gegriffen und transportiert werden können, der Arbeitsraum der Lastentransportanlage, in dem Lasten transportiert werden können, aber mehr oder weniger auf diesen zentralen Bereich zwischen den Aufhängevorrichtungen beschränkt ist. Beim Stand der Technik ist es schwierig und ab einer gewissen Entfernung vom zentralen Bereich praktisch unmöglich, Lasten mit der Lastaufnahmevorrichtung aufzunehmen und zu transportieren. An den Rändern, also in der Nähe der Aufhängevorrichtung kommt es zu durchhängenden Positionierseilen und die beim Stand der Technik als Lastenträger verwendete Plattform ist dort schwer zu kontrollieren.

Aufgabe der Erfindung ist es daher, eine Lastentransportanlage der oben genannten Art dahingehend zu verbessern, dass der Arbeitsraum zwischen den Aufhängevorrichtungen möglichst groß ist.

Hierfür schlägt die Erfindung vor, dass der Lastenträger zumindest eine Mehrfach-Seilaufhängung aufweist, mittels der zumindest zwei der Positionierseile über jeweils einen Seilverbinder mit dem Lastenträger verbunden sind, wobei jeder der Seilverbinder um zumindest zwei orthogonal zueinander ausgerichtete Schwenkachsen an der Mehrfach-Seilaufhängung schwenkbar gelagert ist und alle Schwenkachsen der Seilverbinder sich in einem gemeinsamen Schnittpunkt dieser Mehrfach-Seilaufhängung schneiden.

Günstigerweise treffen sich dabei alle Schwenkachsen immer, also in anderen Worten in jeder beliebigen Betriebsstellung des Lastenträgers, in dem gemeinsamen Schnittpunkt dieser Mehrfach-Seilaufhängung.

Durch diese Mehrfach-Seilaufhängung kann ein besonders großer Arbeitsraum zwischen den Aufhängevorrichtungen erzielt werden. Die Mehrfach-Seilaufhängung erlaubt es, auch in randlichen Bereichen des Raumes zwischen den Aufhängevorrichtungen den Lastenträger gezielt in die Position zu bringen, in der er benötigt wird, um die Last aufzuheben oder abzulegen. Durch die Verwendung von Mehrfach-Seilaufhängungen der genannten Art am Lastenträger kann dieser auch in den genannten randlichen Bereichen sehr gut beherrscht werden. Vor allem wird durch die Verwendung von solchen Mehrfach-Seilaufhängungen am Lastenträger auch eine Entkopplung zwischen einer am Lastenträger schwankenden Last und den Positionierseilen erzielt. Es kommt nicht oder zumindest nicht so schnell zu einem Pendeln der Positionierseile, wenn die an der Lastaufnahmevorrichtung hängende Last pendelt bzw. schwankt. Besonders günstig ist die Verwendung von solchen Mehrfach-Seilaufhängungen, wenn der Lastenträger an vier, fünf, sechs oder mehr Positionierseilen und damit auch an einer entsprechenden Anzahl an Aufhängevorrichtungen aufgehängt ist.

Der Arbeitsraum ist der Raum zwischen den Aufhängevorrichtungen, in dem die an der Lastaufnahmevorrichtung befestigte bzw. von der Lastaufnahmevorrichtung aufgenommene Last von der Lastentransportanlage von einem Ort zum einem anderen Ort transportiert werden kann.

Der Begriff des Seiles ist allgemein aufzufassen. Es handelt sich dabei um ein längliches flexibles Element, das auf Zug belastbar und auf eine Winde aufwickelbar ist. Es kann sich bei dem Seil jeweils um ein Seil im engeren Sinn, z.B. ein Stahlseil, aber auch um ein Band oder eine Kette oder dergleichen handeln. All dies wird der sprachlichen Vereinfachung halber unter dem Begriff des Seiles subsummiert. Dies gilt sowohl für die Positionierseile als auch für die weiter unten noch genannten Hubseile und Betätigungsseile.

Das jeweilige Seil kann als ein einzelnes Seil ausgeführt sein. Entsprechend wird hier für das Seil auch im Wesentlichen der Singular verwendet. Natürlich kann das jeweilige, der sprachlichen Vereinfachung wegen im Singular bezeichnete, Seil aber auch durch mehrere, insbesondere parallel zueinander verlaufende Seile oder ein Seilpaket realisiert werden. Darüber hinaus ist es genauso gut möglich, einzelne oder mehrere der Seile z.B. in Form eines Flaschenzuges umzulenken bzw. auszuführen. Dies kann an die jeweiligen Aufgabenstellungen und die dort zu berücksichtigenden Lastfälle im Rahmen der Erfindung jeweils angepasst werden. Auch dies gilt sowohl für die Positionierseile als auch für die weiter unten noch genannten Hubseile und Betätigungsseile.

Der Lastenträger ist das Teil, an dem die Positionierseile jeweils mit ihrem von der jeweiligen Aufhängevorrichtung abgewandten Ende angreifen. Der Lastenträger hängt somit mittels der Positionierseile an den Aufhängevorrichtungen. Durch Betätigen der Positionierseilwinden, also in anderen Worten durch entsprechendes Auf- oder Abwickeln des jeweiligen Positionierseils auf die bzw. von der jeweiligen Positionierseilwinde, kann der Lastenträger im oder über dem Arbeitsraum verfahren werden. Hierbei ist klar, dass es in der Regel notwendig ist, alle Positionierseile auf- oder abzuwickeln, um den Lastenträger zu bewegen. Dies ist beim Stand der Technik aber an sich bekannt und muss nicht weiter erläutert werden.

Die Lastaufnahmevorrichtung ist das Teil der Lastentransportanlage, welches der Befestigung der Last am Lastenträger dient. Es kann sich z.B. um einen Haken oder einen mechanischen oder magnetischen Greifer, eine Schaufel oder dergleichen handeln, je nachdem welche Art von Last mittels der Lastentransportanlage transportiert werden soll. Handelt es sich bei den Lasten um einzelne Gegenstände, so bieten sich oft ein Haken oder eine Greifvorrichtung als entsprechende Lastaufnahmevorrichtung an. Handelt es sich bei der zu transportierenden Last hingegen um Schüttgut wie z.B. Kies oder Sand, so kann die Lastaufnahmevorrichtung eine Schaufel, ein Kiesgreifer oder dergleichen sein. Handelt es sich bei der Last um eine Flüssigkeit, so kann die Lastaufnahmevorrichtung z.B. ein entsprechendes Gefäß sein, in dem die Flüssigkeit aufgenommen werden kann. Hier sind der Umsetzung der Erfindung keine engen Grenzen gesetzt. Es können praktisch alle beim Stand der Technik bekannten und für das jeweilige Einsatzfeld geeigneten Lastaufnahmevorrichtungen für die Realisierung der Erfindung verwendet werden.

Erfindungsgemäße Lastentransportanlagen könnten auch als Seilroboter bezeichnet werden.

Erfindungsgemäße Lastentransportanlagen weisen zumindest drei Positionierseile und entsprechend auch zumindest drei voneinander distanziert angeordnete Aufhängevorrichtungen auf. Die Erfindung kommt aber insbesondere dann besonders gut zur Geltung, wenn die Lastentransportanlage mehr als drei Positionierseile, also z.B. vier, fünf oder sechs Positionierseile und eine entsprechende Anzahl von Aufhängevorrichtungen aufweist. Die Aufhängevorrichtungen werden, günstigerweise aber nicht zwingend, möglichst gleichmäßig voneinander distanziert aufgestellt, z.B. so, dass sie in einer Draufsicht jeweils in den Ecken eines in sich geschlossenen Polygonzuges angeordnet sind. Bei drei Aufhängevorrichtungen ist dies ein Dreieck, bei vier Aufhängevorrichtungen ein Viereck, bevorzugt ein Quadrat oder ein Rechteck, bei fünf Aufhängevorrichtungen ein Fünfeck usw..

Die Aufhängevorrichtungen sind die Vorrichtungen, an denen zumindest jeweils eines der Positionierseile aufgehängt ist. Zur Ausbildung der Aufhängevorrichtungen können in dem jeweiligen Gelände bzw. in dem jeweiligen Bereich, in dem die Lastentransportanlage arbeiten soll, bereits vorhandene Aufhängemöglichkeiten genutzt werden. Dies können z.B. bei Gebäuden bereits bestehende Wände oder im Fall einer natürlichen Topographie Felswände, Felsnasen oder andere, vorzugsweise gegenüber der Umgebung erhöht angeordnete, Punkte sein. Es kann aber auch vorgesehen sein, dass zumindest eine der, vorzugsweise alle, Aufhängevorrichtungen zumindest einen Mast oder Turm aufweist bzw. aufweisen, wobei auf dem Mast oder Turm die Positionierseilwinde und/oder eine Umlenkseilrolle für das, an der jeweiligen Aufhängevorrichtung hängende Positionierseil angeordnet ist. Es ist dabei möglich die Positionierseilwinde an einem erhöhten oder auch dem höchsten Punkt des Mastes oder Turmes anzuordnen. In diesem Fall kann dann gegebenenfalls auf Umlenkseilrollen für das jeweilige Positionierseil an der jeweiligen Aufhängevorrichtung verzichtet werden. Es ist aber auch möglich, die Positionierseilwinde weiter unten an der jeweiligen Aufhängevorrichtung anzuordnen. Dann ist es in der Regel günstig, wenn das Positionierseil über eine Umlenkseilrolle der Aufhängevorrichtung geführt wird, welche über der Positionierseilwinde an der jeweiligen Aufhängevorrichtung angeordnet ist. Die Aufhängevorrichtungen können stationär, also fix in den jeweiligen Untergrund verankert, aber auch bewegbar ausgebildet sein. Sie können z.B. wie im eingangs genannten Stand der Technik gezeigt, auf fahrbaren Untersätzen oder in anderer Art und Weise von einer Position zu einer anderen Position verlagerbar ausgestaltet sein. Es kann vorgesehen sein, dass die jeweilige Aufhängevorrichtung im Untergrund verankert oder nur auf den jeweiligen Untergrund aufgestellt wird. Die Aufhängevorrichtungen können Druckstützen wie auch Zugstreben aufweisen. Bei den Druckstützen kann vorgesehen sein, dass diese lediglich mit Druckeinleitflächen auf dem Untergrund stehen, gegebenenfalls nur gegen ein seitliches Abrutschen gesichert. Die Zugstreben können im Untergrund verankert sein oder einen, mit einem zur Aufnahme der jeweiligen Zugkräfte geeigneten Gewicht ausgestatteten, Sockel aufweisen, welcher lediglich auf den Untergrund abgestellt wird. Bei dem Sockel kann es sich um einen fixen Körper, wie z.B. einen Betonkörper, aber auch um ein z.B. mit Wasser oder anderen Flüssigkeiten oder Schüttgut befüllbaren Behälter handeln. Letzteres hat den Vorteil, dass der Sockel im nicht befüllten Zustand relativ leicht und damit gut transportierbar ist.

Bei der Verwendung von Mehrfach-Seilaufhängungen gibt es verschiedene Möglichkeiten. So kann z.B. vorgesehen sein, dass alle Positionierseile mittels der Mehrfach-Seilaufhängung über jeweils einen Seilverbinder mit dem Lastenträger verbunden sind, wobei jeder der Seilverbinder um zumindest zwei orthogonal zueinander ausgerichtete Schwenkachsen an der Mehrfach-Seilaufhängung schwenkbar gelagert ist und alle Schwenkachsen der Seilverbinder sich in einem gemeinsamen Schnittpunkt dieser Mehrfach-Seilaufhängung schneiden. Auch hier ist bevorzugt vorgesehen, dass sich alle Schwenkachsen der Seilverbinder immer, also in jeder beliebigen Betriebsstellung, im gemeinsamen Schnittpunkt der Mehrfach-Seilaufhängung schneiden.

In einer anderen Gruppe von Ausgestaltungsformen der Erfindung kann aber auch vorgesehen sein, dass der Lastenträger eine längserstreckte Tragtraverse aufweist und die Mehrfach-Seilaufhängung an der Tragtraverse, vorzugsweise an einem Ende der Tragtraverse, angeordnet ist. Bei solchen Ausgestaltungsformen kann z.B. vorgesehen sein, dass der Lastenträger eine Einzel-Seilaufhängung aufweist, mittels der ein einzelnes anderes der Positionierseile mit dem Lastenträger verbunden ist, wobei die Einzel-Seilaufhängung von der Mehrfach-Seilaufhängung beabstandet, vorzugsweise an einem der Mehrfach-Seilaufhängung gegenüberliegenden Ende der Tragtraverse, an der Tragtraverse angeordnet ist. Es ist aber auch möglich, dass der Lastenträger zumindest eine weitere Mehrfach-Seilaufhängung aufweist, mittels der zumindest zwei andere der Positionierseile mit dem Lastenträger verbunden sind, wobei die Mehrfach-Seilaufhängungen voneinander beabstandet, vorzugsweise an einander gegenüberliegenden Enden der Tragtraverse, an der Tragtraverse angeordnet sind. In anderen Worten ist es also auch möglich, dass die Positionierseile gruppiert über eine entsprechende Anzahl von Mehrfach-Seilaufhängungen am Lastenträger befestigt sind. Die weiteren Mehrfach-Seilaufhängungen können dabei wie die bereits beschriebenen Mehrfach-Seilaufhängungen ausgeführt werden. Insbesondere ist es also möglich, dass die zumindest zwei anderen der Positionierseile über jeweils einen weiteren Seilverbinder mittels der weiteren Mehrfach-Seilaufhängung mit dem Lastenträger verbunden sind, wobei jeder der weiteren Seilverbinder um zumindest zwei orthogonal zueinander ausgerichtete Schwenkachsen an der weiteren Mehrfach-Seilaufhängung schwenkbar gelagert ist und alle Schwenkachsen der weiteren Seilverbinder sich in einem gemeinsamen Schnittpunkt dieser weiteren Mehrfach-Seilaufhängung schneiden.

Bevorzugt ist vorgesehen, dass die Seilverbinder jeweils als längserstreckte und/oder in sich starre Körper ausgebildet sind. Um einen möglichst großen Schwenkwinkel der Seilverbinder zu erzielen, sehen besonders bevorzugte Varianten vor, dass die Seilverbinder L-förmig oder C-förmig ausgebildet sind. Günstig ist es jedenfalls, wenn an einem ersten Ende des jeweiligen Seilverbinders das jeweilige Positionierseil befestigt ist und der Seilverbinder mit einem zweiten, dem ersten Ende gegenüberliegenden Ende an der Mehrfach-Seilaufhängung schwenkbar gelagert ist.

Die Mehrfach-Seilaufhängungen können unterschiedlich ausgestaltet sein. So kann z.B. vorgesehen sein, dass zumindest zwei der Seilverbinder mittels zumindest zwei zueinander orthogonalen Achsbolzen, um die zumindest zwei orthogonal zueinander ausgerichteten Schwenkachsen schwenkbar an der Mehrfach-Seilaufhängung gelagert sind. Bevorzugt ist dabei vorgesehen, dass der jeweilige Seilverbinder an einem ersten der Achsbolzen um eine erste der Schwenkachsen schwenkbar gelagert ist und der erste der Achsbolzen mit dem zweiten der Achsbolzen um eine zweite der Schwenkachsen schwenkbar gelagert ist. Es kann in besonders bevorzugten Ausgestaltungsformen dann auch noch eine dritte Schwenkachse realisiert werden, z.B. in dem der erste der Achsbolzen und der zweite der Achsbolzen schwenkbar in einer Gabel gelagert sind, wobei die Gabel um die dritte Schwenkachse schwenkbar bzw. drehbar ist. Alle drei Schwenkachsen schneiden sich dabei dann günstigerweise in dem gemeinsamen Schnittpunkt der Mehrfach-Seilaufhängung.

Eine andere Ausgestaltungsform für die Mehrfach-Seilaufhängung sieht vor, dass die Mehrfach-Seilaufhängung für jeden der schwenkbar an ihr gelagerten Seilverbinder eine kreisbogenabschnittsförmige Führung aufweist, an der der jeweilige Seilverbinder zum Verschwenken um eine erste der orthogonalen Schwenkachsen geführt ist und die kreisbogenabschnittsförmigen Führungen zum Verschwenken der jeweiligen Seilverbinder um eine zweite der zueinander orthogonal ausgerichteten Schwenkachsen um einen gemeinsamen Achsbolzen schwenkbar sind. Diese Varianten einer Mehrfach-Seilaufhängung sind besonders dann günstig, wenn vier, fünf oder mehr Positionierseile mit dem Lastenträger verbunden werden müssen.

Grundsätzlich kann bei der Umsetzung der Erfindung die Befestigung der Lastaufnahmevorrichtung an dem Lastenträger, wie beim Stand der Technik bekannt, ausgeführt werden.

Im Sinne der eingangs genannten Aufgabe, einen möglichst großen Arbeitsraum zwischen den Aufhängevorrichtungen zu erzielen, sehen besonders bevorzugte Ausgestaltungsformen der Erfindung aber vor, dass die Lastentransportanlage eine Hubseilwinde und ein Hubseil aufweist, wobei das Hubseil von der Hubseilwinde aufwickelbar und abwickelbar ist, und die Lastaufnahmevorrichtung mittels des Hubseils am Lastenträger hängt und relativ zum Lastenträger heb- und senkbar ist.

Durch das Aufhängen der Lastaufnahmevorrichtung am Lastenträger mittels des Hubseils und die Möglichkeit die Lastaufnahmevorrichtung mittels des Hubseils relativ zum Lastenträger zu heben und von diesem abzusenken, wird der Arbeitsraum der Lastentransportanlage gegenüber dem Stand der Technik zusätzlich vergrößert, insbesondere in den randlichen Bereichen in Richtung hin zu den jeweiligen Aufhängevorrichtungen. Mit der Lastentransportanlage können auch Lasten in einem randnahen Bereich zwischen den Aufhängevorrichtungen sicher und kontrolliert transportiert werden.

Ein weiterer Vorteil besteht darin, dass die Lastentransportanlage auch besser bei Geländeoberflächen mit einer starken Oberflächentopographie bzw. mit einem unruhigen Relief, also in Gebieten eingesetzt werden kann, in denen zwischen den Aufhängevorrichtungen Hügel oder andere Erhebungen und/oder Täler und/oder andere Geländesenken ausgebildet sind. Bei Lastentransportanlagen gemäß des Standes der Technik können bei sehr unruhigem Relief bzw. starker Oberflächentopographie gewisse Bereiche zwischen den Aufhängevorrichtungen mittels der Lastaufnahmevorrichtung gar nicht mehr erreicht werden. Die heb- und senkbare Aufhängung der Lastaufnahmevorrichtung mittels des Hubseils am Lastenträger macht es hingegen auch bei unruhiger Oberflächentopographie bzw. starkem Oberflächenrelief möglich, Lasten ohne große Einschränkungen zwischen verschiedenen Positionen zu transportieren.

Damit das Positionierseil in einem möglichst optimalen Winkel, also möglichst in einem orthogonalen Winkel auf die Positionierseilwinde aufläuft bzw. von dieser abläuft, sehen bevorzugte Varianten der Erfindung vor, dass die Positionierseilwinde(n) jeweils schwenkbar an der jeweiligen Aufhängevorrichtung angeordnet ist bzw. sind. Es kann sich dabei um eine freie Schwenkbarkeit handeln, bei der der Zug am Positionierseil für ein entsprechendes Verschwenken der Positionierseilwinde sorgt. Es kann aber auch vorgesehen sein, dass die Positionierseilwinde(n) motorisch angetrieben schwenkbar ausgebildet ist bzw. sind. In diesen Ausgestaltungsformen sorgt ein Antrieb, wie z.B. ein Motor und/oder ein entsprechendes Getriebe für ein gezieltes Verschwenken der Positionierseilwinde, um diese zum optimalen Ein- bzw. Auslaufen des Positionierseils auszurichten. Die Schwenkbarkeit der Positionierseilwinde ist besonders dann günstig, wenn entweder gar keine Umlenkseilrolle an der jeweiligen Aufhängevorrichtung vorhanden ist, also das Positionierseil direkt von der Positionierseilwinde zum Lastenträger läuft. Ist hingegen eine entsprechende Umlenkseilrolle für das Positionierseil an der Aufhängevorrichtung vorhanden, so ist es dann günstig, wenn die Positionierseilwinde entsprechend, vorzugsweise motorisch angetrieben, schwenkbar ist, wenn die Umlenkseilrolle relativ nah an der Positionierseilwinde angeordnet ist. Die schwenkbare Anordnung kann aber nicht nur bei der Positionierseilwinde sondern in gleicher Art und Weise auch bei der Hubseilwinde und bei einer gegebenenfalls vorhandenen Betätigungsseilwinde für ein später noch genanntes Betätigungsseil realisiert werden, um die genannten Vorteile in entsprechend adaptierter Form auch dort zu erzielen.

Bevorzugte Varianten sehen vor, dass die Lastaufnahmevorrichtung zumindest eine Umlenkseilrolle zur Umlenkung des Hubseils aufweist. Insbesondere unter Nutzung dieser Umlenkseilrolle kann z.B. vorgesehen sein, dass das Hubseil zwischen dem Lastenträger und der Lastaufnahmevorrichtung über einen Flaschenzug geführt ist, um so größere Kräfte, insbesondere beim Heben der an der Lastaufnahmevorrichtung angeordneten Last, erzielen zu können. Bei der Ausbildung eines Flaschenzugs werden auch die im Hubseil auftretenden Seilkräfte entsprechend dem aus der Einscherung resultierenden Quotienten verringert. Das Hubseil kann dadurch leichter und dünner ausgeführt werden. Damit wird das Kräftegleichgewicht der Positionierseile weniger beeinflusst. Gleichzeitig wird auch hierdurch eine Vergrößerung des Arbeitsraumes erreicht, da so der Lastenträger auch näher an die Aufhängevorrichtung herangeführt werden, die der Aufhängevorrichtung mit der Hubseilwinde diagonal gegenüberliegt.

In einer ersten Gruppe von Ausgestaltungsformen kann die Hubseilwinde an einer der Aufhängevorrichtungen angeordnet sein. Der Lastenträger kann dann eine Ablenkseilrolle aufweisen, wobei das Hubseil von der Hubseilwinde über die Ablenkseilrolle zur Lastaufnahmevorrichtung geführt ist. Die Hubseilwinde kann, wie bezüglich der Positionierseilwinde oben bereits ausgeführt, schwenkbar ausgebildet, vorzugsweise an der Aufhängevorrichtung angeordnet, sein. Auch hier ist eine freie Schwenkbarkeit oder eine motorisch angetriebene Schwenkbarkeit der Hubseilwinde möglich. Auch hier kann diese Schwenkbarkeit dazu genutzt werden, dass das Hubseil immer in einem möglichst orthogonalen Winkel auf die Hubseilwinde aufläuft bzw. von dieser abgewickelt wird.

Alternativ und in einer anderen Gruppe von Ausgestaltungsformen kann die Hubseilwinde aber auch am Lastenträger angeordnet sein. Hierzu kann vorgesehen sein, dass eine elektrische Energieversorgungsleitung zur Versorgung eines Antriebsmotors der Hubseilwinde mit elektrischer Energie in zumindest eines der Positionierseile integriert ist. Genauso gut ist es möglich, dass diese Energieversorgungsleitung als separate Leitung zur Hubseilwinde geführt ist. Im Fall der Integration in eines der Positionierseile kann auf an sich bekannte Technologien zurückgegriffen werden. So kann die Energieversorgungsleitung oder können die Energieversorgungsleitungen als elektrisch leitende, vorzugsweise nach außen elektrisch isolierte, Litzen in das jeweilige Positionierseil eingeflochten sein. Es sind auch kombinierte Varianten möglich, bei denen die Energieversorgungsleitung bzw. die Energieversorgungsleitungen über eine Teilstrecke in das Positionierseil integriert und über eine andere Teilstrecke als separate Leitung zur Hubseilwinde geführt ist bzw. sind.

Die Lastaufnahmevorrichtung kann als in sich starrer Bauteil wie z.B. als Lasthaken ausgebildet sein. In anderen Ausgestaltungsformen kann die Lastaufnahmevorrichtung aber auch einen betätigbaren Aktuator aufweisen. Dieser kann z.B. zum Befestigen der Last an der Lastaufnahmevorrichtung ausgebildet sein. Dieser Aktuator kann grundsätzlich durch einen lokalen Motor angetrieben sein. Bevorzugte Varianten sehen aber vor, dass zumindest ein Betätigungsseil der Lastentransportanlage zum Betätigen des Aktuators, vorzugsweise über den Lastenträger zur Lastaufnahmevorrichtung geführt ist. Es kann sich dabei um ein Betätigungsseil oder mehrere Betätigungsseile handeln. Diese können einen oder mehrere Aktuatoren oder evtl. auch mehrere Funktionen eines Aktuators ansteuern.

Die Positionierseile verlaufen insbesondere unter Berücksichtigung ihres jeweiligen Durchhangs günstigerweise in Vertikalebenen zwischen der jeweiligen Aufhängevorrichtung und dem Lastenträger. Diese Vertikalebenen werden also von dem jeweiligen Positionierseil aufgespannt. Müssen auch Hubseile und/oder Betätigungsseile und/oder Energieversorgungsleitungen von dem Lastenträger zur Aufhängevorrichtung geführt werden, so ist günstigerweise vorgesehen, dass das Hubseil und/oder das Betätigungsseil und/oder die Energieversorgungsleitung in derselben Vertikalebene geführt ist, wie das zwischen der jeweiligen Aufhängevorrichtung und dem Lastenträger geführte Positionierseil. Es ist dabei klar, dass die jeweilige Vertikalebene verschoben wird, wenn das sie aufspannende Positionierseil beim Bewegen des Lastenträgers seinen Verlauf ändert.

Weitere Merkmale und Einzelheiten bevorzugter Ausgestaltungsformen der Erfindung werden beispielhaft in der nachfolgenden Figurenbeschreibung erläutert. Es zeigen:
- Fig. 1: eine schematische Darstellung zur Größe des Arbeitsraums einer Lastentransportanlage gemäß des Standes der Technik;
- Fig. 2: eine schematische Darstellung zur Größe des Arbeitsraums bei einer erfindungsgemäßen Lastentransportanlage;
- Fig. 3 bis 8: schematisierte Gesamtansichten zu einer erfindungsgemäßen Ausführungsform einer Lastentransportanlage;
- Fig. 9 bis 12: Darstellungen zu einer ersten Ausgestaltungsform eines Lastenträgers und einer Lastenaufnahmevorrichtung für eine Lastentransportanlage gemäß der Fig. 3 bis 8;
- Fig. 13: eine abgewandelte Ausführungsvariante von Lastenträger und Lastenaufnahmevorrichtung basierend auf der in den Fig. 9 bis 12 gezeigten Ausgestaltungsform;
- Fig. 14 bis 16: eine dritte Ausführungsvariante eines Lastenträgers mit Lastenaufnahmevorrichtung für die Lastentransportanlage gemäß der Fig. 3 bis 8;
- Fig. 17 bis 19: eine Ausgestaltungsform eines Lastenträgers und einer Lastaufnahmevorrichtung für eine Lastentransportanlage mit fünf Positionierseilen;
- Fig. 20 und 21: Darstellungen zu einer weiteren erfindungsgemäßen Lastentransportanlage;
- Fig. 22: eine Variante wie Aufhängevorrichtungen miteinander verbunden werden können;
- Fig. 23 und 24: jeweils eine Ausgestaltungsform eines Lastenträgers für eine erfindungsgemäße Lastentransportanlage mit einer einzigen Mehrfach-Seilaufhängung für alle Positionierseile;
- Fig. 25 und 26: ein weiteres erfindungsgemäßes Ausführungsbeispiel einer Lastentransportanlage;
- Fig. 27 bis 32: Darstellungen zu Beispielen möglicher Ausgestaltungsformen von Aufhängevorrichtungen und Positionierseilwinden für erfindungsgemäße Lastentransportanlagen.

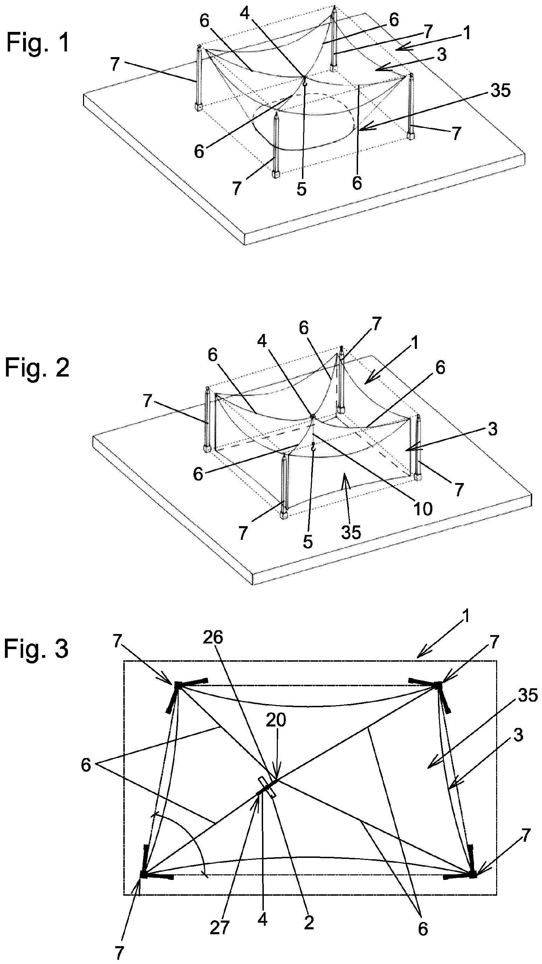

Die in Fig. 1 dargestellte Lastentransportanlage gemäß des Standes der Technik weist vier in Form von Masten ausgebildete Aufhängevorrichtungen 7 auf, an denen jeweils Positionierseile 6 aufgehängt sind. Alle Positionierseile 6 verlaufen von der jeweiligen Aufhängevorrichtung 7 zum Lastenträger 4. Beim Stand der Technik ist die hier als Haken ausgeführte Lastaufnahmevorrichtung 5 direkt am Lastenträger 4 fixiert. Durch Aufwickeln und Abwickeln der Positionierseile 6 auf die jeweils hier nicht dargestellten Positionierseilwinden 8, kann der Lastenträger 4 samt Lastaufnahmevorrichtung 5 im Bereich zwischen den Aufhängevorrichtungen 7 bewegt werden, um Lasten 2 aufzunehmen, an einen anderen Ort zu transportieren und auf der Oberfläche 35 des Geländes wieder abzulegen. Beim Stand der Technik muss dabei der Lastenträger 4 samt Lastaufnahmevorrichtung 5 unmittelbar bis zur Last transportiert werden, damit die Last an der Lastaufnahmevorrichtung 5 befestigt und an einen anderen Ort transportiert werden kann. Dasselbe gilt für das Ablegen der Last 2 an einem anderen Ort. Der Arbeitsraum 3 beschreibt dabei den Teilbereich bzw. das Teilvolumen des Gesamtvolumens zwischen den Aufhängevorrichtungen 7, in dem eine Last mittels des Lastenträgers 4 und der Lastaufnahmevorrichtung 5 aufgenommen und an einen anderen Ort transportiert werden kann.

Beim Stand der Technik, bei dem die Lastaufnahmevorrichtung 5 fix am Lastenträger 4 befestigt ist, ist der Arbeitsraum 3, wie in Fig. 1 schematisch dargestellt, auf einen zentralen Bereich begrenzt. Teilbereiche außerhalb dieses zentralen Bereichs können mit dem Lastenträger 4 und der Lastaufnahmevorrichtung 5 nicht erreicht werden, um dort Lasten 2 aufzunehmen oder Lasten 2 abzulegen. Der in Fig. 1 eingezeichnete Arbeitsraum 3 beim Stand der Technik verjüngt sich in Richtung Oberfläche 35 hin immer mehr in Richtung Zentrum zwischen den Aufhängevorrichtungen 7.

Fährt man beim Stand der Technik den Lastenträger 4 mit der Lastenaufnahmevorrichtung 5 in die Randbereiche des Raumes zwischen den Aufhängevorrichtungen 7, so kommt es wegen durchhängender Bereiche der Positionierseil 6 und wegen eines durch die Aufhängung an den Positionierseilen 6 bedingten Verkippens des Lastenträgers 4 beim Stand der Technik zu nicht mehr kontrollierbaren und auch nicht mehr steuer- und berechenbaren Zuständen, sodass beim Stand der Technik, wie in Fig. 1 dargestellt, der Arbeitsraum 3 eben auf einen zentralen Bereich zwischen den Aufhängevorrichtungen 7 beschränkt ist.

Fig. 2 zeigt nun schematisiert, wie bei ansonsten gleichem Aufbau wie in Fig. 1, die Lastaufnahmevorrichtung 5 mittels eines Hubseils 10 am Lastenträger 4 hängt, wobei durch ein entsprechendes Auf- und Abwickeln des Hubseils 10 auf eine bzw. von einer hier nicht dargestellten Hubseilwinde 9 die Lastaufnahmevorrichtung 5 relativ zum Lastenträger 4 heb- und senkbar ist. Dies führt zu einer wesentlichen Vergrößerung des Arbeitsraums 3, wie dies in Fig. 2 dargestellt ist. Der Arbeitsraum 3 ist bei der Erfindung nicht mehr, wie in Fig. 1 dargestellt, auf einen zentralen Bereich beschränkt, sondern reicht viel weiter in randliche Bereiche in der Nähe der Aufhängevorrichtung 7 als beim Stand der Technik. Insbesondere in den Randbereichen kann durch entsprechendes Auf- und Abwickeln der Positionierseile 6 der Lastenträger 4 in einer relativ hohen Position über der Oberfläche 35 angeordnet werden. Eine in diesem randlichen Bereich liegende Last 2 kann dann durch das Ablassen der Lastaufnahmevorrichtung 5 mittels des Hubseils 10 vom Lastenträger 4 immer noch erreicht und aufgenommen oder entsprechend auch in diesen randlichen Bereichen noch abgelegt werden. Natürlich ist man dabei nicht auf die in Fig. 2 nur stark schematisierte Anordnung mit vier Aufhängevorrichtungen 7 und entsprechend vier Positionierseilen 6 beschränkt. Die Erfindung kann, wie eingangs ausgeführt, auch für Lastentransportanlagen 1 mit nur drei Positionierseilen 6 und entsprechend auch nur drei Aufhängevorrichtungen 7, aber vor allem auch mit mehr als drei, also vier, fünf oder sechs etc. Positionierseilen 6 und Aufhängevorrichtungen 7 realisiert werden. Die Aufhängevorrichtungen 7 stehen dabei, in einer Draufsicht auf die Oberfläche 35 gesehen, günstigerweise in den Ecken eines gedachten, in sich geschlossenen Polygonzuges, der bei drei Aufhängevorrichtungen 7 eben ein Dreieck, bei vier Aufhängevorrichtungen 7, vorzugsweise ein Rechteck oder Quadrat, allgemein gesprochen ein Viereck, bei fünf Aufhängevorrichtungen 7 ein Fünfeck usw. ist.

Eine erfindungsgemäße Maßnahme, um den Arbeitsraum 3 möglichst groß zwischen den Aufhängevorrichtungen 7 auszugestalten, sieht, wie eingangs bereits erläutert vor, dass der Lastenträger 4 zumindest eine Mehrfach-Seilaufhängung 20 aufweist, wie sie nachfolgend anhand der Ausführungsbeispiele noch einmal erläutert wird. Durch die Verwendung von solchen Mehrfach-Seilaufhängungen 20 kann der Lastenträger 4 viel besser in die Randbereiche in der Nähe der Aufhängevorrichtung 7 verfahren werden, ohne dass es dabei zu schwer zu beherrschenden bzw. zu kontrollierenden Zuständen kommt. Diese Mehrfach-Seilaufhängungen 20 sorgen aber auch bei einem Pendeln der Last 2 am Lastenträger 4 für eine Entkopplung, sodass die Positionierseile 6 hierdurch nicht durch das Pendeln der Last 2 ebenfalls in eine Pendelbewegung versetzt werden.

Ein weiterer Vorteil erfindungsgemäßer Lastentransportanlagen 1 gegenüber dem Stand der Technik kommt dann zum Tragen, wenn die Oberfläche 35 des Geländes nicht eben ist, sondern eine entsprechend raue Topographie bzw. ein entsprechend raues Relief mit erhöhten Bereichen und Senken oder Tälern aufweist. Insbesondere bei solchen anspruchsvolleren Ausgestaltungsformen der Oberfläche 35 des Geländes kann mittels erfindungsgemäßen Lastentransportanlagen 1 gegenüber dem Stand der Technik viel besser der gesamte zur Verfügung stehende Raum mit der Lastaufnahmevorrichtung 5 angefahren und damit genutzt werden, um dort Lasten 2 aufzunehmen oder abzulegen.

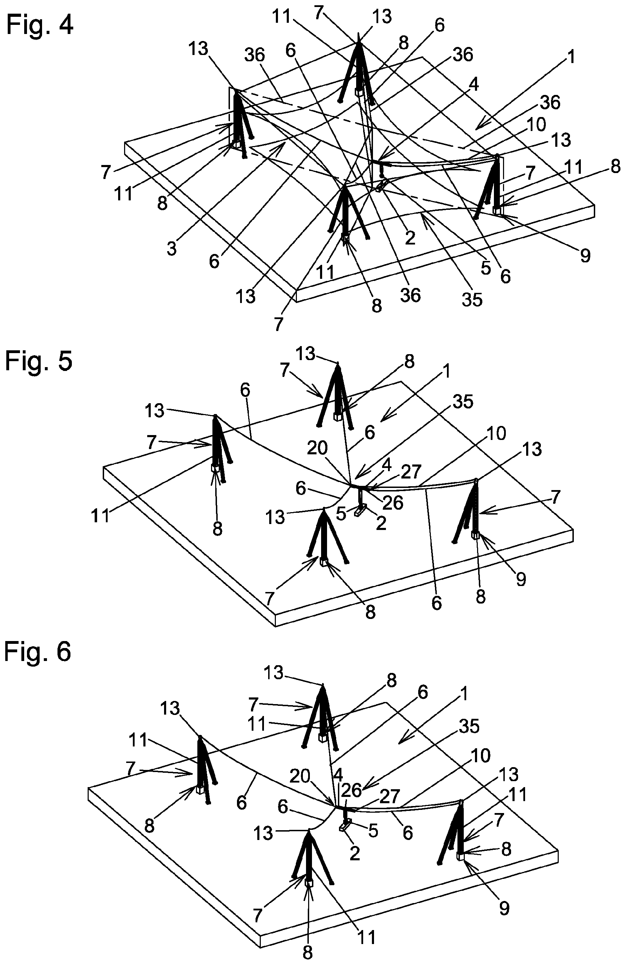

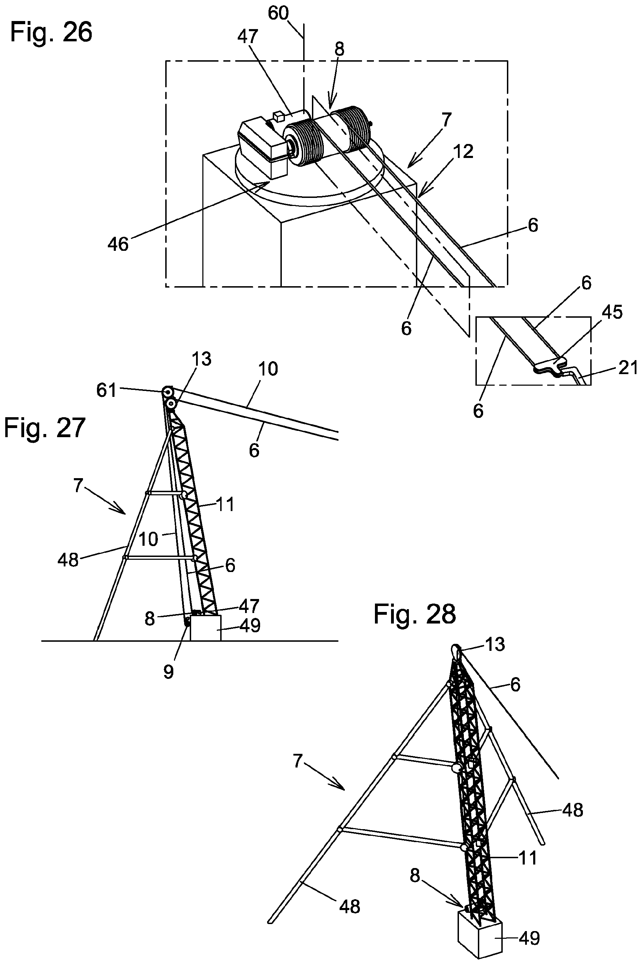

Die Fig. 3 bis 8 zeigen nun ein erstes Ausführungsbeispiel einer erfindungsgemäßen Lastentransportanlage 1 in schematisierten Gesamtansichten. Fig. 3 zeigt eine Draufsicht. Die Fig. 4 bis 8 zeigen schematisiert in perspektivischen Ansichten von schräg oben, wie eine Last 2 an einer ersten Position innerhalb des Arbeitsraums 3 mittels der Lastaufnahmevorrichtung 5 aufgenommen, zu einem anderen Ort innerhalb des Arbeitsraums 3 transportiert und dort auf der Oberfläche 35 des Geländes wieder abgelegt wird. Die Lastentransportanlage 1, welche in den Fig. 3 bis 8 gezeigt ist, weist vier in Form von Mastanordnungen ausgebildete Aufhängevorrichtungen 7 und eine entsprechende Anzahl von Positionierseilen 6 auf. Der Lastenträger 4 hängt mittels der Positionierseile 6 an den Aufhängevorrichtungen 7. Jede Aufhängevorrichtung 7 weist eine Positionierseilwinde 8 zum Auf- und Abwickeln des jeweiligen Positionierseils 6 auf. Die Positionierseilwinden 8 sind in den Fig. 3 bis 8 nicht explizit dargestellt. Zu möglichen Ausgestaltungsformen wird aber auf die detaillierteren Ausführungen hierzu anhand der Fig. 26 bis 32 weiter hinten verwiesen. In dem hier gezeigten Ausführungsbeispiel gemäß der Fig. 3 bis 8 sind die Positionierseile 6 jeweils von der Positionierseilwinde 8 über eine Umlenkseilrolle 13 an der jeweiligen Aufhängevorrichtung 7 geführt. Drei der Positionierseile 6 sind über eine Mehrfach-Seilaufhängung 20 und einer bei diesem ersten Ausführungsbeispiel vorgesehenen Tragtraverse 26 des Lastenträgers 4 befestigt. Das vierte Positionierseil 6 ist über eine Einzel-Seilaufhängung 27 am Lastenträger 4 bzw. dessen Tragtraverse 26 befestigt. Auf verschiedene Beispiele, wie solche Lastenträger 4 konkret realisiert werden können, wird weiter hinten noch anhand der nachfolgenden Figuren eingegangen.

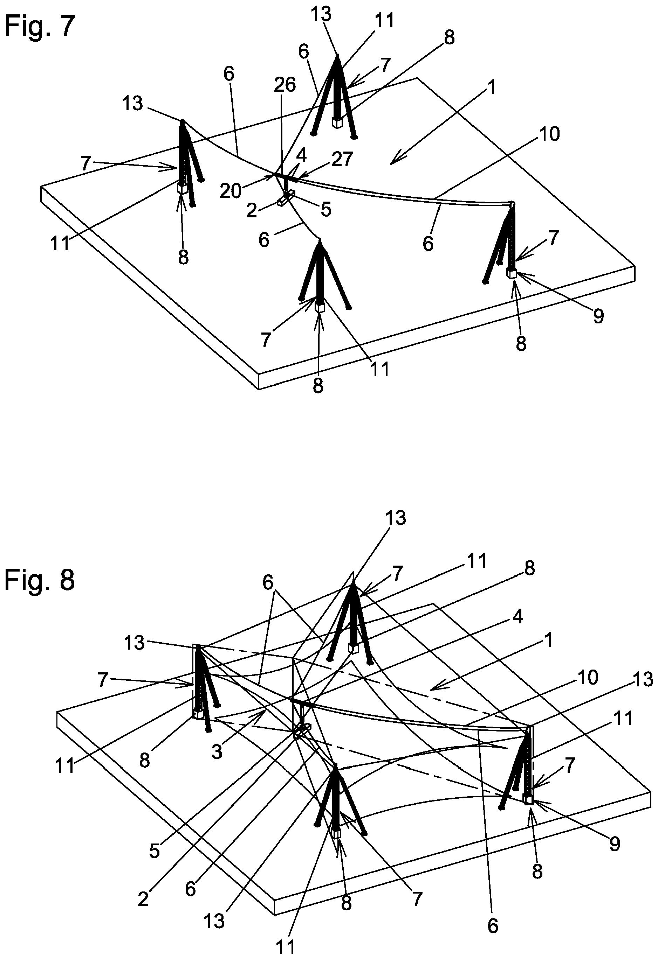

In diesem Ausführungsbeispiel ist jedenfalls auch vorgesehen, dass die hier als Haken ausgeführte Lastaufnahmevorrichtung 5 mittels eines Hubseils 10 am Lastenträger 4 hängt und so relativ zum Lastenträger heb- und senkbar ist. Das Hubseil 10 ist auf einer Hubseilwinde 9 aufwickelbar. Die Hubseilwinde 9 befindet sich in diesem ersten Ausführungsbeispiel an einer der Aufhängevorrichtungen 7, wie dies z.B. konkret in Fig. 27 gezeigt und weiter unten noch erläutert ist. Das Hubseil 10 wird bevorzugt entlang eines der Positionierseile 6 zu der entsprechenden Aufhängevorrichtung 7 geführt. Jedes der Positionierseile 6 spannt mit seinem Durchhang eine Vertikalebene 36 auf. Diese Vertikalebenen 36 sind in den Fig. 4 und 8 beispielhaft eingezeichnet und in den Fig. 5 bis 7 der Übersichtlichkeit halber weggelassen. Das Hubseil 10 verläuft in bevorzugten Ausgestaltungsformen, wie der hier gezeigten, in der Vertikalebene 36, welche von dem Positionierseil 6 aufgespannt wird, welches zur selben Aufhängevorrichtung 7 wie das Hubseil 10 geführt ist.

In den Fig. 3, 4 und 8 ist der Arbeitsraum 3 dieser Lastentransportanlage 1 gestrichelt dargestellt. In den Fig. 5, 6 und 7 ist er der Übersichtlichkeit halber nicht eingezeichnet.

Durch entsprechendes Auf- und Abwickeln der Positionierseile 6 auf die bzw. von den jeweiligen Positionierseilwinden 8 ist nun in Fig. 4 der Lastenträger 4 so im bzw. über den Arbeitsraum 3 verfahren worden, dass die Lastaufnahmevorrichtung 5, welche hier als Haken ausgebildet ist, sich über der Last 2 befindet. Um die Last 2 nun mit der Lastaufnahmevorrichtung 5 aufnehmen zu können, wird die Lastaufnahmevorrichtung 5 mittels des Hubseils 10 vom Lastenträger 4 so weit nach unten abgelassen, bis sie in die Last 2 eingehängt werden kann. Dieser Zustand ist in Fig. 5 gezeigt. Anschließend wird die Lastaufnahmevorrichtung 5 samt daran hängender Last 2 angehoben, was in Fig. 6 dargestellt ist. Um nun die Last 2 zu einer neuen Position innerhalb des Arbeitsraums 3 zu bringen, werden die Positionierseile 6 entsprechend auf ihre jeweiligen Positionierseilwinden 8 auf- bzw. abgewickelt, wodurch der Lastenträger 4 samt daran hängender Lastaufnahmevorrichtung 5 und Last 2 an eine neue Position verfahren wird, so wie dies in Fig. 7 beispielhaft dargestellt ist. Der Lastenträger 4 kann sich dabei innerhalb aber auch über dem Arbeitsraum 3 befinden. Um die Last 2 nun an dieser neuen Position im Arbeitsraum 3 auf der Oberfläche 35 des Geländes abzulegen, wird die Lastaufnahmevorrichtung 5 samt daran hängender Last 2 mittels des Hubseils 10 vom Lastenträger 4 abgesenkt, was in Fig. 8 dargestellt ist. Anschließend kann die Lastaufnahmevorrichtung 5 von der Last 2 getrennt werden, sodass ein darauf folgender Arbeitsvorgang mittels Lastenträger 4 und Lastaufnahmevorrichtung 5 durchgeführt werden kann.

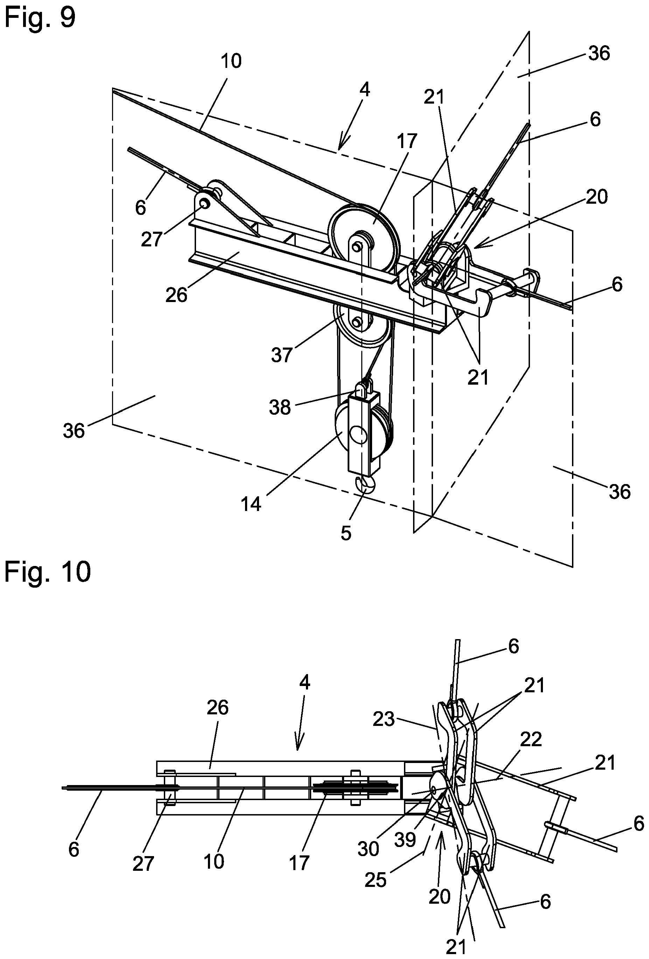

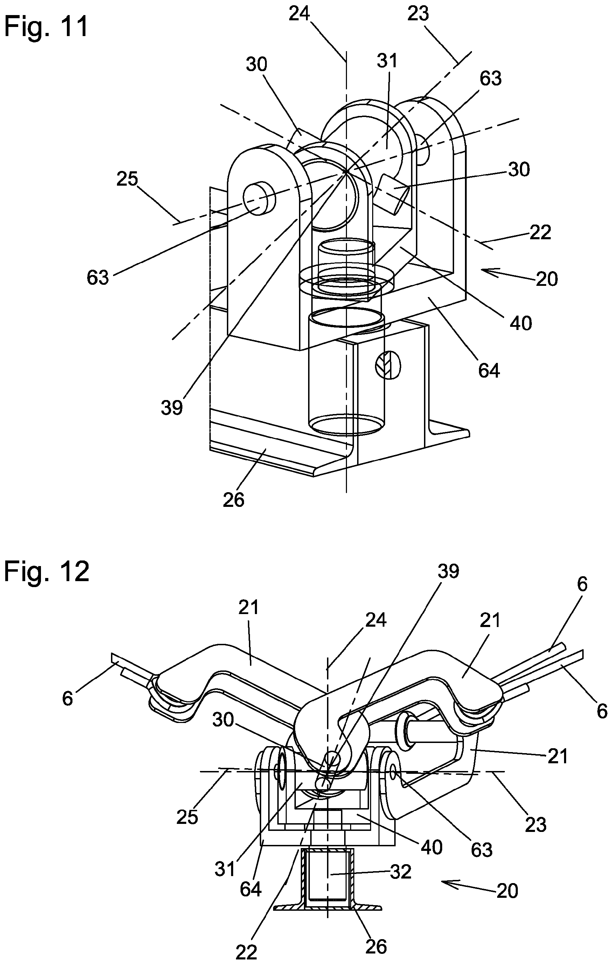

Fig. 9 zeigt nun eine erste Ausführungsform eines Lastenträgers 4 und einer Lastaufnahmevorrichtung 5, wie sie im Ausführungsbeispiel gemäß der Fig. 3 bis 8 zum Einsatz kommen kann. Der Lastenträger 4 weist eine längserstreckte Tragtraverse 26 auf. An dieser Tragtraverse 26 sind in diesem Ausführungsbeispiel drei der Positionierseile 6 über eine Mehrfach-Seilaufhängung 20 befestigt. Bevorzugt greift die Mehrfach-Seilaufhängung 20, wie hier auch dargestellt, an einem Ende der Tragtraverse 26 an. Am gegenüberliegenden Ende der Tragtraverse 26 ist das vierte der Positionierseile 6 mittels einer Einzel-Seilaufhängung 27 befestigt. Die Einzel-Seilaufhängung 27 ist von der Mehrfach-Seilaufhängung 20 beabstandet an der Tragtraverse 26 angeordnet. Sie befindet sich bevorzugt, wie in diesem Ausführungsbeispiel gezeigt, an dem der Mehrfach-Seilaufhängung 20 gegenüberliegenden Ende der Tragtraverse 26. In der Einzel-Seilaufhängung 27 ist das Positionierseil 6 um eine Achse schwenkbar aufgehängt. Außerdem lassen alle Positionierseile 6 eine gewisse Verdrehung um ihre Längsachse zu. Die Mehrfach-Seilaufhängung 20, so wie sie hier realisiert ist, wird weiter unten anhand der Fig. 11 und 12 genauer erläutert. Es ist allerdings darauf hinzuweisen, dass auch in diesem Ausführungsbeispiel bei der Mehrfach-Seilaufhängung 20 jedes der dort angreifenden Positionierseile 6 über jeweils einen Seilverbinder 21 mit dem Lastenträger 4 verbunden ist, wobei jeder dieser Seilverbinder 21 mit zumindest zwei orthogonal zueinander ausgerichtete Schwenkachsen 22, 23, 24, 25 an der Mehrfach-Seilaufhängung 20 schwenkbar gelagert ist und alle Schwenkachsen 22, 23, 24, 25 der Seilverbinder 21 sich in einem gemeinsamen Schnittpunkt 39 dieser Mehrfach-Seilaufhängung 20 schneiden. Dies gilt günstigerweise immer, also in allen Stellungen bzw. Betriebszuständen des ersten Trägers 4. Darauf hinzuweisen ist noch, dass die Seilverbinder 21, wie hier auch im Ausführungsbeispiel gezeigt, günstigerweise jeweils längserstreckt ausgebildet sind. Bevorzugt handelt es sich bei den Seilverbindern 21 jeweils um starre Körper. Besonders bevorzugt sind die Seilverbinder 21 L-förmig oder C-förmig ausgeformt. Mit einem ersten Ende sind die Seilverbinder 21 jeweils am jeweiligen Positionierseil 6 befestigt. Mit einem zweiten, dem ersten Ende gegenüberliegenden Ende, sind die Seilverbinder 21 jeweils an den Mehrfach-Seilaufhängungen 20 schwenkbar gelagert. Insbesondere durch die L- oder noch besser C-förmige Ausformung ist ein großer Schwenkwinkel des jeweiligen Seilverbinders 21 um die jeweilige Schwenkachse 22, 23, 25 der Mehrfach-Seilaufhängung 20 möglich.

In Fig. 9 sind auch die Vertikalebenen 36 gezeigt. Jede der Vertikalebenen 36 wird durch eines der Positionierseile 6 und dessen Durchhang aufgespannt, wie dies bereits weiter vorne erläutert ist. In der Mehrfach-Seilaufhängung 20 schneiden sich die Vertikalebenen 36 der Positionierseile 6, welche in dieser Mehrfach-Seilaufhängung 20 zusammengeführt sind, in einer vertikalen Schnittlinie. Auf dieser vertikalen Schnittlinie liegt der weiter hinten noch genauer erläuterte gemeinsame Schnittpunkt 39 der Schwenkachsen 22, 23, 24 und 25.

Die Lastenaufnahmevorrichtung 5 hängt in diesem Ausführungsbeispiel mittels des Hubseils 10 am Lastenträger 4, sodass sie relativ zum Lastenträger 4 heb- und senkbar ist. Im gezeigten Ausführungsbeispiel weist die Lastaufnahmevorrichtung 5 einen einfachen Haken auf. Sie kann aber auch in beliebig anderer Form, z.B. als Greifer, als Magnetaufnahmevorrichtung, als Schaufel oder wie auch immer ausgeführt sein. Das Hubseil 10 ist jedenfalls, wie bereits anhand der Fig. 3 bis 8 erläutert, auf eine Hubseilwinde 9 aufwickelbar und von dieser abwickelbar, sodass durch Auf- und Abwickeln des Hubseils 10 das Heben und Senken der Lastaufnahmevorrichtung 5 relativ zum Lastenträger 4 erfolgt. Grundsätzlich ist es möglich, dass das Hubseil 10 zwischen Lastaufnahmevorrichtung 5 und Lastenträger 4 als Einfach-Seil geführt ist. Im gezeigten Ausführungsbeispiel weist die Lastaufnahmevorrichtung 5 die Umlenkseilrolle 14 zur Umlenkung des Hubseils 10 auf. Nachdem die Hubseilwinde 9 in diesem Ausführungsbeispiel an einer der Aufhängevorrichtungen 7 angeordnet ist, ist das Hubseil 10 in diesem Ausführungsbeispiel über eine Ablenkseilrolle 17 des Lastenträgers 14 zur Lastaufnahmevorrichtung 5 hin geführt. Zusammen mit der weiteren Ablenkseilrolle 37 und der Hubseilfixierung 38 wird so ein Flaschenzug gebildet. Dies ist also ein Beispiel dafür, dass die Lastaufnahmevorrichtung 5 günstigerweise mittels eines mit dem Hubseil 10 ausgebildeten Flaschenzuges am Lastenträger 4 hängt. Dies ist besonders dann günstig, wenn schwere Lasten 2 gehoben werden müssen.

Fig. 10 zeigt eine Draufsicht auf den Lastenträger 4 gemäß Fig. 9. In Fig. 10 sind auch strichliert die Schwenkachsen 22, 23 und 25 angedeutet, welche anhand der Prinzipskizzen in den Fig. 11 und 12 noch genauer erläutert werden. Bei der Mehrfach-Seilaufhängung 20 gemäß der Fig. 9 bis 12 ist vorgesehen, dass zumindest zwei der Seilverbinder 21 mittels zumindest zwei zueinander orthogonalen Achsbolzen 30 und 31 um die zumindest zwei orthogonal zueinander ausgerichteten Schwenkachsen 22 und 23 schwenkbar an der Mehrfach-Seilaufhängung 20 gelagert sind. Diese zwei Seilverbinder 21 sind im hier gezeigten Ausführungsbeispiel gemäß Fig. 11 und 12 jeweils an einem ersten der Achsbolzen 30 um die erste der Schwenkachsen 22 schwenkbar gelagert. Der erste der Achsbolzen 30 ist mit dem zweiten der Achsbolzen 31 um die zweite Schwenkachse 23 schwenkbar gelagert. Bevorzugt ist, wie hier in Fig. 11 und 12 dargestellt, vorgesehen, dass zwei der Seilverbinder 21 an einem gemeinsamen Achsbolzen 30 schwenkbar angeordnet sind.

Der dritte Seilverbinder 21 dieses Ausführungsbeispiels ist um die vierte Schwenkachse 25 schwenkbar an dritten Achsbolzen 63 schwenkbar gelagert. Die dritten Achsbolzen 63 sind in diesem Ausführungsbeispiel an einer Gabel 64 ausgebildet. Diese Gabel 64 ist mittels des Achsbolzens 32 um die Schwenkachse 24 schwenkbar an der Tragtraverse 26 gelagert.

Die beiden Achsbolzen 30 und 31 und damit auch die an ihnen angreifenden Seilverbinder 21 sind an der Gabel 40 um die Schwenkachse 23 schwenkbar gelagert. Zusätzlich sind die Achsbolzen 30 und 31 in diesem wie auch in anderen bevorzugten Ausgestaltungsformen mittels der Gabel 40 gemeinsam um die dritte Schwenkachse 24 schwenkbar. Die Gabel 40 ist hierzu in diesem Ausführungsbeispiel ebenfalls mittels des Achsbolzens 32 um die Schwenkachse 24 schwenkbar an der Tragtraverse 26 gelagert. Dabei ist jedoch darauf hinzuweisen, dass die beiden Gabeln 40 und 64 unabhängig voneinander um die Schwenkachse 24 schwenkbar sind. Diese unabhängige Schwenkbarkeit der Gabeln 40 und 64 kann durch eine entsprechend unabhängige Lagerung auf dem Achsbolzen 32 erreicht werden. Es wäre aber natürlich auch möglich, zwei unabhängig voneinander um die Schwenkachse 24 drehbare, koaxial zueinander angeordnete Achsbolzen vorzusehen, wobei jeweils eine der Gabeln 40 und 64 mit jeweils einem der Achsbolzen verbunden wäre. Alle vier Schwenkachsen 22, 23, 24 und 25 schneiden sich jedenfalls im gemeinsamen Schnittpunkt 39.

In Fig. 12 ist auch zu sehen, wie die beiden gemeinsam am Achsbolzen 30 um die Schwenkachse 22 schwenkbaren Seilverbinder 21 C-förmig ausgebildet sind. Zusätzlich ist auch der dritte Seilverbinder 21 C-förmig ausgebildet.

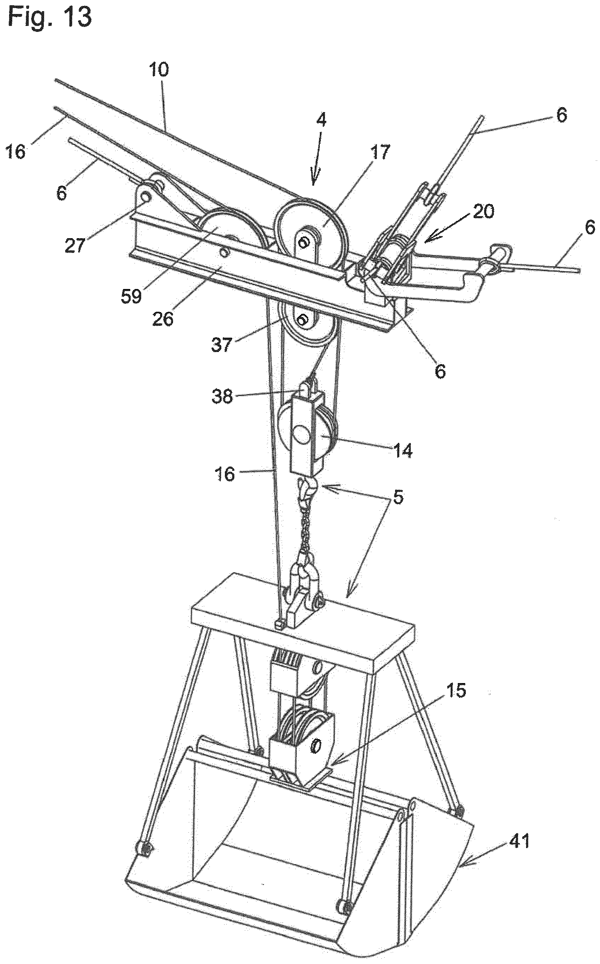

Fig. 13 zeigt nun beispielhaft eine weitergebildete Variante, basierend auf dem Lastenträger 4 und der Lastaufnahmevorrichtung 5 gemäß der Fig. 9 bis 12.

Der Unterschied zu dem vorab geschilderten Ausführungsbeispiel besteht in der Ausbildung der Lastaufnahmevorrichtung 5. Diese besteht in diesem Ausführungsbeispiel aus dem bereits aus den Fig. 9 bis 12 bekannten Haken und zusätzlich aus der daran angehängten Greiferschaufel 41, welche dazu verwendet werden kann, Schüttgut wie Kies, Sand oder dergleichen von einem Ort zu einem anderen Ort zu transportieren. Es handelt sich um ein Beispiel, bei dem die Lastaufnahmevorrichtung 5 einen betätigbaren Aktuator 15 aufweist, wobei ein Betätigungsseil 16 der Lastentransportanlage 1 zum Betätigen des Aktuators 15 über den Lastenträger 4 zur Lastaufnahmevorrichtung 5 geführt ist. Der Aktuator 15 dient in diesem Ausführungsbeispiel zum Öffnen und Schließen der Greiferschaufel 41, wie dies an sich bekannt ist. Das Betätigungsseil 16 ist an der Tragtraverse 26 über eine weitere Umlenkseilrolle 59 umgelenkt und von dort zu einer hier nicht näher dargestellten Betätigungsseilwinde geführt, welche wie die Hubseilwinde 9 und die Positionierseilwinden 8 an einer der Aufhängevorrichtung 7 angeordnet sein kann. Günstigerweise verläuft das Betätigungsseil 16 wie das Hubseil 10 dieses Ausführungsbeispiels zwischen dem Lastenträger 4 und der Aufhängevorrichtung 7, an der sich die Betätigungsseilwinde befindet, in der Vertikalebene 36, welche von dem an der Einzel-Seilaufhängung 27 aufgehängten Positionierseil 6 aufgespannt wird. Fig. 13 ist natürlich nur eines von vielen Beispielen, wie mittels eines Betätigungsseiles 16 und eines Aktuators 15 an der Lastaufnahmevorrichtung 5 aktiv betätigbare Greifer oder dergleichen angeordnet sein können. Natürlich können auch anders ausgebildete Aktuatoren 15 mit einem oder mehreren entsprechenden Betätigungsseilen 16 betätigt werden und entsprechend an der Lastaufnahmevorrichtung 5 vorgesehen sein.

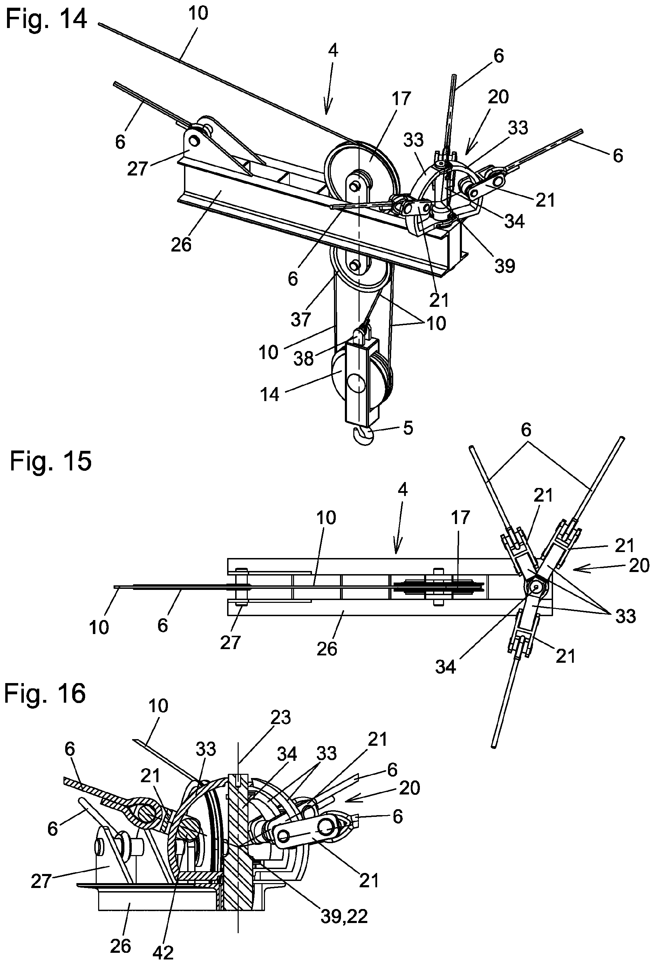

Fig. 14 bis 16 zeigen eine weitere mögliche Ausgestaltungsform eines Lastenträgers 4, welcher in der Lastentransportanlage 1 gemäß der Fig. 3 bis 8 eingesetzt werden kann. Die Unterschiede zum Ausführungsbeispiel gemäß der Fig. 9 bis 12 liegen in der Art der Ausgestaltungsform der Mehrfach-Seilaufhängung 20, in der drei der Positionierseile 6 zusammengeführt sind. Ansonsten ist der Lastenträger 4 der Fig. 14 bis 16 so ausgebildet, wie der Lastenträger 4 der Fig. 9 bis 12, sodass auf diese Merkmale nicht weiter eingegangen werden muss. Fig. 14 zeigt eine perspektivische Ansicht auf diesen Lastenträger 4, Fig. 15 eine Draufsicht. In Fig. 16 ist die Art der Ausbildung der Mehrfach-Seilaufhängung 20 besonders gut zu sehen. Es handelt sich bei Fig. 16 um eine teilweise geschnittene Darstellung. Es handelt sich jedenfalls um ein Ausführungsbeispiel, bei dem die Mehrfach-Seilaufhängung 20 für jeden der schwenkbar an ihr gelagerten Seilverbinder 21 eine kreisbogenabschnittsförmige Führung 33 aufweist, an der der jeweilige Seilverbinder 21 zum Verschwenken um eine erste der orthogonalen Schwenkachsen 22 geführt ist und die kreisbogenabschnittsförmige Führung 33 des jeweiligen Seilverbinders 21 zum Verschwenken des jeweiligen Seilverbinders 21 um eine zweite der zueinander orthogonal ausgerichteten Schwenkachsen 22 um einen gemeinsamen Achsbolzen 34 schwenkbar sind. In Fig. 16 sind einer der Seilverbinder 21 und dessen kreisbogenabschnittsförmige Führung 33 sowie der Achsbolzen 34 geschnitten bzw. schraffiert dargestellt. Die nicht geschnitten bzw. schraffiert dargestellten Seilverbinder 21 und kreisbogenabschnittsförmigen Führungen 33 sind in analoger Art und Weise ausgebildet. In Fig. 16 ist gut zu erkennen, dass der geschnitten dargestellte Seilverbinder 21 mittels einer Rolle 42 auf der kreisbogenabschnittsförmigen Führung 33 abrollen kann. Natürlich könnte anstelle der Rolle 42 auch eine Gleitfläche oder dergleichen eingesetzt werden. Es ist jedenfalls so, dass durch die entsprechende Führung dieses Seilverbinders 21 auf der kreisbogenabschnittsförmigen Führung 33 dieser Seilverbinder 21 um die in Fig. 16 normal zur Blattebene stehende und durch den gemeinsamen Schnittpunkt 39 verlaufende Schwenkachse 22 schwenkbar ist. Die dazu orthogonale Schwenkachse 23, welche ebenfalls durch den gemeinsamen Schnittpunkt 39 läuft, ist in diesem Ausführungsbeispiel die Längsachse des Achsbolzens 34. Die Seilverbinder 21 können zusammen mit ihren jeweiligen kreisbogenabschnittsförmigen Führungen 33 um den gemeinsamen Achsbolzen 34 und damit um die Schwenkachse 23 geschwenkt werden. Auch durch diese Art der Mehrfach-Seilaufhängung 20 wird erreicht, dass jeder Seilverbinder 21 um zumindest zwei orthogonal zueinander ausgerichtete Schwenkachsen 22 und 23 an der Mehrfach-Seilaufhängung 20 schwenkbar gelagert ist und alle Schwenkachsen 22 und 23 der Seilverbinder sich in dem gemeinsamen Schnittpunkt 39 dieser Mehrfach-Seilaufhängung 20 schneiden. Bei dieser Art der Ausgestaltungsform der Mehrfach-Seilaufhängung 20 ist, wie hier auch gezeigt, bevorzugt vorgesehen, dass die Seilverbinder 21 gerade ausgeführt sind.

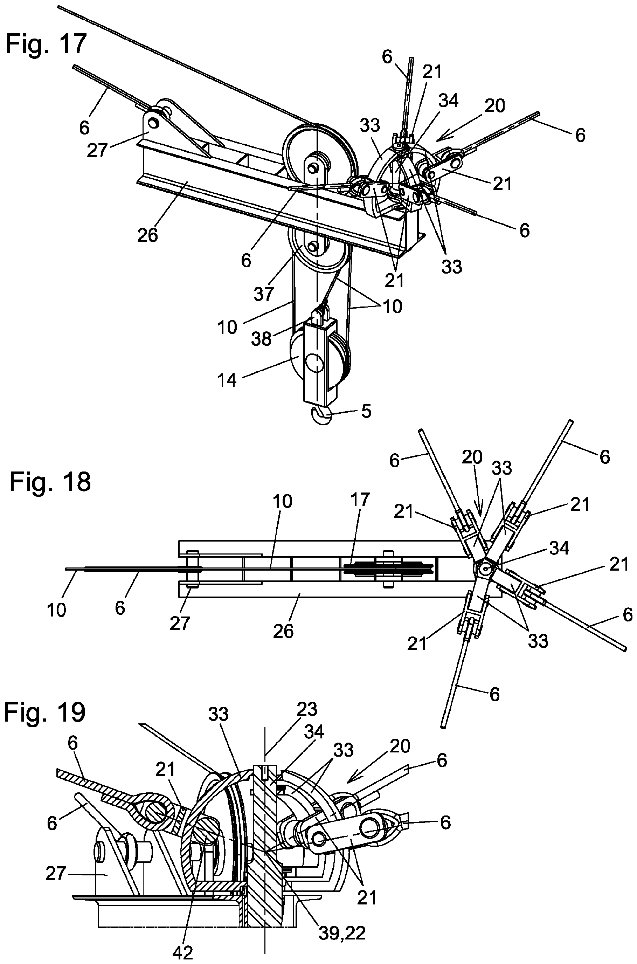

Diese Art der Mehrfach-Seilaufhängung 20 mit den kreisbogenabschnittsförmigen Führungen 33 für die jeweiligen Seilverbinder 21 ist besonders dann günstig, wenn relativ viele Positionierseile 6 in einer Mehrfach-Seilaufhängung 20 zusammengeführt werden sollen. Entsprechend zeigen die Fig. 17 bis 19 ein Beispiel, bei dem vier Positionierseile 6 in einer solchen Mehrfach-Seilaufhängung 20 zusammengeführt sind. Ansonsten entspricht die Technologie dieser Mehrfach-Seilaufhängung 20 und dieses Ausführungsbeispiels eines Lastenträgers 4 mit Lastenaufnahmevorrichtung 5 gemäß der Fig. 17 bis 19 der Variante gemäß der Fig. 14 bis 16, sodass zur Vermeidung von Wiederholungen auf das oben Gesagte verwiesen wird.

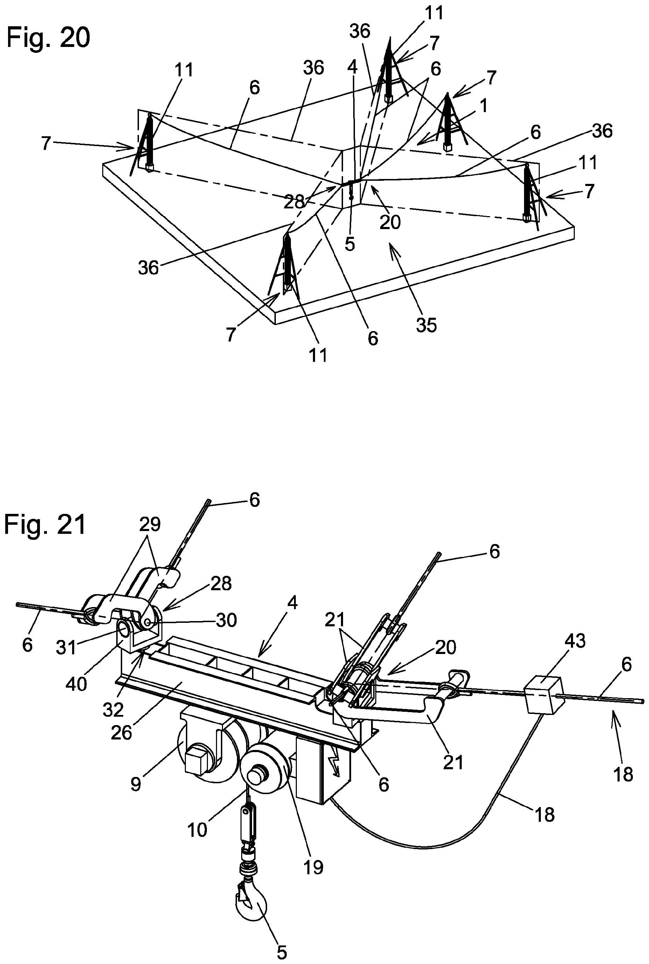

In den Fig. 20 und 21 ist ein weiteres Ausführungsbeispiel der Erfindung gezeigt. Fig. 20 zeigt eine schematische Darstellung der gesamten Lastentransportanlage 1, Fig. 21 eine Detaildarstellung zur dort verwendeten Art des Lastenträgers 4. Ein erster Unterschied zu den bislang gezeigten Ausführungsvarianten besteht darin, dass hier in diesem Ausführungsbeispiel exemplarisch gezeigt wird, dass am Lastenträger 4 die Positionierseile 6 auch mit mehr als einer Mehrfach-Seilaufhängung 28 befestigt sein können. Im Ausführungsbeispiel gemäß Fig. 20 und 21 weist der Lastenträger 4 eine weitere Mehrfach-Seilaufhängung 28 auf, mittels der zumindest zwei andere der Positionierseile 6 mit dem Lastenträger 4 verbunden sind. Die Mehrfach-Seilaufhängung 20 und die weitere Mehrfach-Seilaufhängung 28 sind voneinander beabstandet, vorzugsweise an einander gegenüberliegenden Enden der Tragtraverse 26 angeordnet. Die Mehrfach-Seilaufhängung 20, in der drei Positionierseile 6 zusammengeführt sind, ist, wie im Ausführungsbeispiel gemäß der Fig. 9 bis 12 ausgebildet. Die am anderen Ende der Tragtraverse 26 angeordnete weitere Mehrfach-Seilaufhängung 28 führt zwei Positionierseile 6 zusammen an den Lastenträger 4. Die Technologie dieser weiteren Mehrfach-Seilaufhängung 28 ist aber ansonsten dieselbe wie bei der Mehrfach-Seilaufhängung 20 für die drei Positionierseile 6. Auch hier ist zur Realisierung der Schwenkachsen 22, 23 und 24 die Konstruktion mit dem ersten Achsbolzen 30, mit dem zweiten Achsbolzen 31 und der Gabel 40 sowie dem daran angeordneten dritten Achsbolzen 32 realisiert. Die weiteren Seilverbinder 29 entsprechen in ihrem Aufbau auch den Seilverbindern 21. Auch hier ist somit vorgesehen, dass jeder der weiteren Seilverbinder 29 um zumindest zwei orthogonal zueinander ausgerichtete Schwenkachsen an der weiteren Mehrfach-Seilaufhängung 28 schwenkbar gelagert sind und alle Schwenkachsen der weiteren Seilverbinder 29 sich in einem gemeinsamen Schnittpunkt dieser weiteren Mehrfach-Seilaufhängung 28 schneiden.

Ein weiterer Unterschied zu den bisherigen Ausführungsbeispielen besteht darin, dass in diesem Ausführungsbeispiel gemäß der Fig. 20 und 21 die Hubseilwinde 9 nicht an einer der Aufhängevorrichtungen 7, sondern direkt am Lastenträger 4 angeordnet ist. Zum Drehen der Hubseilwinde 9 ist darüber hinaus am Lastenträger 4 bzw. an der Tragtraverse 26 ein Antriebsmotor 19 angeordnet, welcher über die Energieversorgungsleitung 18 mit elektrischer Energie gespeist wird. Die Energieversorgungsleitung 18 zur Versorgung des Antriebsmotors 19 der Hubseilwinde 9 mit elektrischer Energie ist in diesem Ausführungsbeispiel zum Teil in eines der Positionierseile 6 integriert und zum Teil als separate Leitung 18 zur Hubseilwinde 9 geführt. Konkret ist dies hier im gezeigten Ausführungsbeispiel so, dass die Energieversorgungsleitung 18 in eines der Positionierseile 6 in an sich bekannter Art und Weise eingeflochten und so zu einer der Aufhängevorrichtungen 7 und dort zu einer an sich bekannten Stromeinspeisung in der Positionierseilwinde 8 geführt ist. An der Auskopplung 43 wird die Energieversorgungsleitung 18 aus dem Positionierseil 6 ausgekoppelt und dann als separate Leitung zum Antriebsmotor 19 geführt.

Natürlich sind auch andere Ausführungsvarianten denkbar. So könnte z.B. die Energieversorgungsleitung 18 zu einer der Aufhängevorrichtungen 7 vollständig als separate Leitung geführt werden. Günstig wäre dann jedenfalls, wenn sie aber in einer Vertikalebene 36 eines der Positionierseile 6 geführt wäre. Genauso gut ist es aber auch denkbar, dass die in das Positionierseil 6 integrierte Energieversorgungsleitung 18 über einen entsprechenden Seilverbinder 21 und die entsprechende Mehrfach-Seilaufhängung 20 bzw. 28 oder eine entsprechende Einzel-Seilaufhängung 27 direkt in den Lastenträger 4 hineingeführt wird.

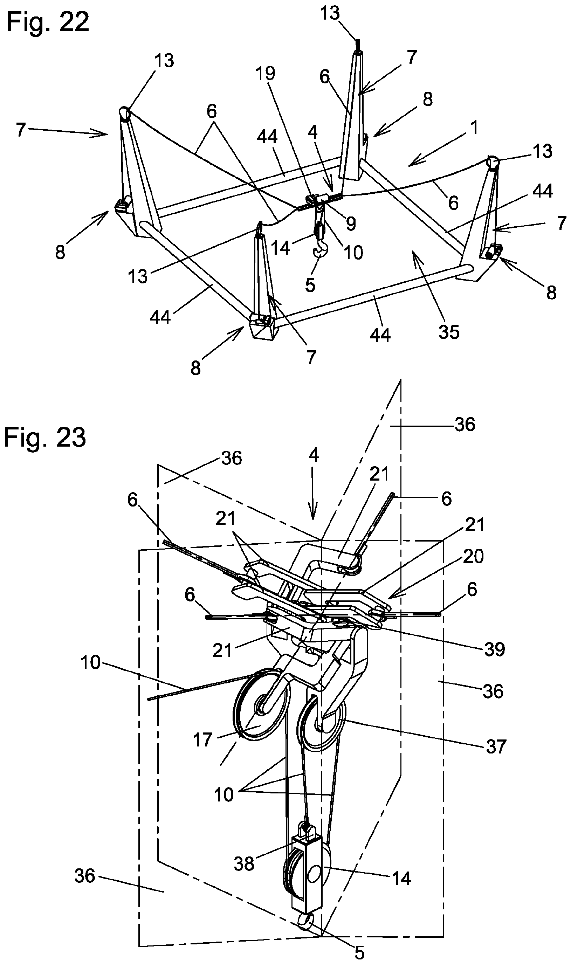

Fig. 22 zeigt nun beispielhaft, dass die Aufhängevorrichtungen 7 der erfindungsgemäßen Lastentransportanlagen 1 nicht nur, wie in den bisher erläuterten Ausführungsbeispielen, als zunächst separate Gebilde ausgeführt sein können. In dem Ausführungsbeispiel gemäß Fig. 22 sind die Aufhängevorrichtungen 7 fix mittels entsprechender Verstrebungen 44 miteinander verbunden, sodass die Lastentransportanlage 1 in dieser Konfiguration auf der jeweiligen Oberfläche 35 des Geländes aufgestellt werden und von dieser auch zu einem anderen Ort transportiert werden kann. Solche Ausgestaltungsformen der Lastentransportanlagen 1, bei denen die Aufhängevorrichtungen 7 mittels Verstrebungen 44 fix miteinander verbunden sind, sind besonders gut dann realisierbar, wenn die Lastentransportanlage 1 nicht allzu groß ist. Die Konstruktion mit den Verstrebungen 44 hat jedenfalls den Vorteil, dass die Lastentransportanlage 1 relativ unproblematisch und schnell auf der jeweiligen Oberfläche 35 des Geländes abgestellt werden kann, wodurch gegebenenfalls eine Verankerung der Aufhängevorrichtung 7 entweder relativ einfach ausgeführt oder ganz weggelassen werden kann.

Auch in diesem Ausführungsbeispiel gemäß Fig. 22 ist die Hubseilwinde 9 direkt am Lastenträger 4 angeordnet, sodass die Zuführung des Hubseils 10 von einer der Aufhängevorrichtungen 7 zum Lastenträger 4 entfallen kann. Die Zuführung der Energieversorgungsleitung 18 für den Antriebsmotor 19 der Hubseilwinde 9 kann, wie anhand von Fig. 21 erläutert, oder in anderer geeigneter Art und Weise erfolgen. Natürlich könnte das Hubseil 10, anders als in Fig. 22 dargestellt, auch zu einer der Aufhängevorrichtungen 7 geführt werden.

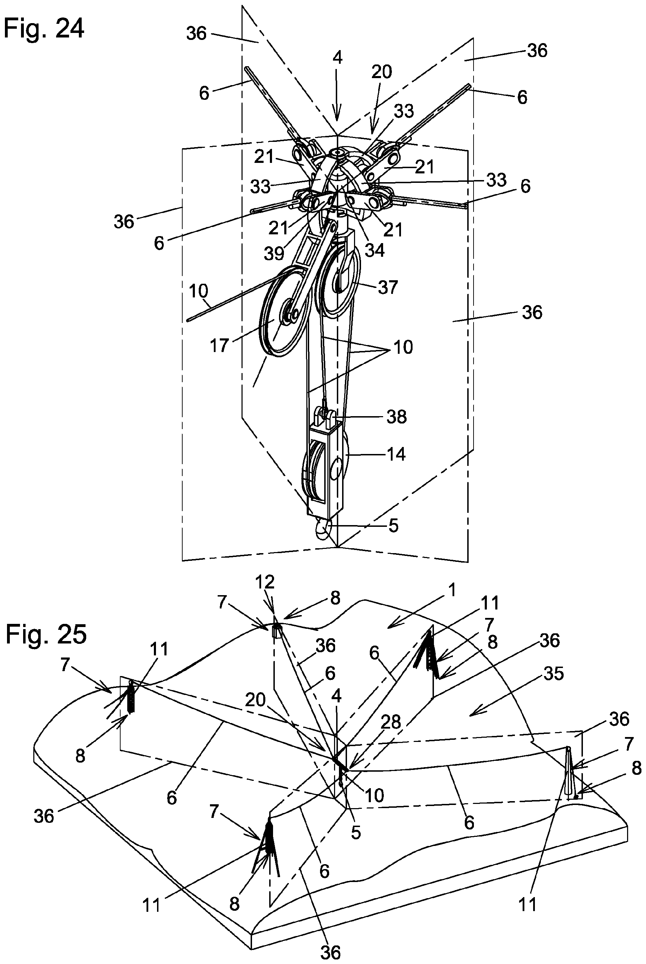

Fig. 23 und 24 zeigen nun Lastenträger 4 für erfindungsgemäße Lastentransportanlagen 1, bei denen alle Positionierseile 6 der Lastentransportanlage 1 mittels einer einzigen Mehrfach-Seilaufhängung 20 über jeweils einen Seilverbinder 21 mit dem Lastenträger 4 verbunden sind. Auch bei diesen Ausführungsbeispielen ist vorgesehen, dass jeder Seilverbinder 21 um zumindest zwei orthogonal zueinander ausgerichtete Schwenkachsen 22, 23, 24 an der Mehrfach-Seilaufhängung 20 schwenkbar gelagert ist und alle Schwenkachsen 22, 23, 24 der Seilverbinder 21 sich in einem gemeinsamen Schnittpunkt 25 dieser Mehrfach-Seilaufhängung 20 schneiden. In Fig. 23 wird dabei dieselbe Technologie in entsprechend angepasster Art und Weise angewendet, wie sie anhand der Fig. 11 und 12 genauer erläutert wurde. Fig. 24 zeigt eine Weiterbildungsform der Technologie mit den kreisbogenabschnittsförmigen Führungen 33 für die Seilverbinder 21, welche in Analogie zu den Beispielen gemäß der Fig. 14 bis 19 ausgeführt sein kann.

Fig. 25 zeigt eine Ausführungsvariante einer Lastentransportanlage 1 mit insgesamt fünf Positionierseilen 6, welche über einer Oberfläche 35 eines Geländes mit relativ unruhiger Topographie aufgebaut ist. Hier in diesem Beispiel kommen verschiedene Arten von Aufhängevorrichtungen 7 zum Einsatz. Vier der fünf Aufhängevorrichtungen 7 weisen dabei Masten 11 auf. Eine der Aufhängevorrichtungen 7 ist in Form eines Turms 12 ausgebildet. Die als Turm 12 ausgeführte Aufhängevorrichtung 7 und die dort angeordnete Positionierseilwinde 8 sind in Fig. 26 genauer dargestellt. In Fig. 26 ist gut zu sehen, dass die Positionierseilwinde 8 bei dieser Variante sich oben auf der als Turm 12 ausgebildeten Aufhängevorrichtung 7 befindet. Die Positionierseilwinde 8 wird über einen ebenfalls auf diesem Turm 12 angeordneten Antriebsmotor 47 angetrieben. Die Positionierseilwinde 8 und der Antriebsmotor 47 befinden sich in diesem Ausführungsbeispiel auf einem Schwenkteller 46. Es handelt sich somit um ein erstes Ausführungsbeispiel bei dem die Positionierseilwinde 8 schwenkbar an der jeweiligen Aufhängevorrichtung 7 angeordnet ist. Im Ausführungsbeispiel gemäß Fig. 26 erfolgt die Verschwenkung um die vertikale Schwenkachse 60. Es handelt sich hier vorzugsweise um eine freie Verschwenkbarkeit, bei der ausschließlich der Zug an den Positionierseilen 6 darüber entscheidet, in welche Richtung die Positionierseilwinde 8 geschwenkt wird. Natürlich kann zum Verschwenken der Positionierseilwinde 8 aber auch ein motorischer Antrieb vorgesehen sein, welcher hier nicht eingezeichnet ist.

Fig. 26 ist auch ein Beispiel, bei dem von einer Positionierseilwinde 8 nicht nur ein Positionierseil 6 sondern zwei parallel zueinander geführte Positionierseile 6 zum jeweiligen Seilverbinder 21 und damit zum Lastenträger 4 geführt sind. Wie in Fig. 26 auch dargestellt, sind die beiden Positionierseile 6 an ihrem von der Positionierseilwinde 8 angewandten Ende mittels einer Querstrebe 45 miteinander verbunden. An dieser Querstrebe 45 greift der Seilverbinder 21 an, welcher in einer der bereits geschilderten Arten und Weisen in einer Mehrfach-Seilaufhängung 20 oder 28 münden kann. Natürlich könnten die beiden Positionierseile 6 dieser Ausführungsvariante über die Querstrebe 45 auch einer Einzel-Seilaufhängung 27 eines entsprechenden Lastenträgers 4 zugeführt sein.

Es ist jedenfalls noch darauf hinzuweisen, dass Fig. 26 ein Beispiel zeigt, bei dem die Positionierseilwinde 8 direkt oben auf der Aufhängevorrichtung 7 bzw. dem Turm 12 angeordnet ist, sodass auf zusätzliche Umlenkseilrollen 13 für das oder die Positionierseile 6 verzichtet wird. Die verschiedenen, anhand von Fig.26 gezeigten Variationen können natürlich auch einzeln oder mit anderen Varianten kombiniert ausgeführt werden.

Fig. 27 und 28 zeigen nun beispielhaft eine Aufhängevorrichtung 7, welche zumindest einen Mast 11 aufweist, wobei auf dem Mast 11 eine Umlenkseilrolle 13 für das an dieser Aufhängevorrichtung 7 hängende Positionierseil 6 angeordnet ist. Die Umlenkseilrolle 13 befindet sich günstigerweise an der Mastspitze. Sie könnte aber auch weiter unten am Mast 13 angeordnet sein. Das Positionierseil 6 ist jedenfalls von dem Lastenträger 4 kommend über die Umlenkseilrolle 13 hin zur weiter unten an der Aufhängevorrichtung 7 befestigten Positionierseilwinde 8 geführt. In Fig. 27 ist zusätzlich auch noch beispielhaft eine weitere Umlenkseilrolle 61 dargestellt, welche über der Umlenkseilrolle 13 am Mast 11 befestigt ist. Über diese weitere Umlenkseilrolle 61 kann bei Bedarf das Hubseil 10 zur weiter unten an der Aufhängevorrichtung 7 befestigten Hubseilwinde 9 geführt sein. In Fig. 28 ist dies nicht dargestellt.

Bei den Fig. 27 und 28 weist die Aufhängevorrichtung 7 jedenfalls zwei Zugstreben 48 auf, welche im jeweiligen Untergrund verankert sind. Der Mast 11 hingegen steht mittels eines Sockels 49 auf dem Untergrund. Dies kann bereits ausreichen, da über den Mast 11 in dieser Ausgestaltungsform nur Druckkräfte auf die Oberfläche 35 bzw. auf den Untergrund ausgeübt werden. Natürlich kann der Sockel 49 aber auch in geeigneter Art und Weise mit dem Untergrund verbunden sein.

Es kann sich beim Sockel 49 z.B. auch um ein gegossenes Betonfundament oder dergleichen handeln.

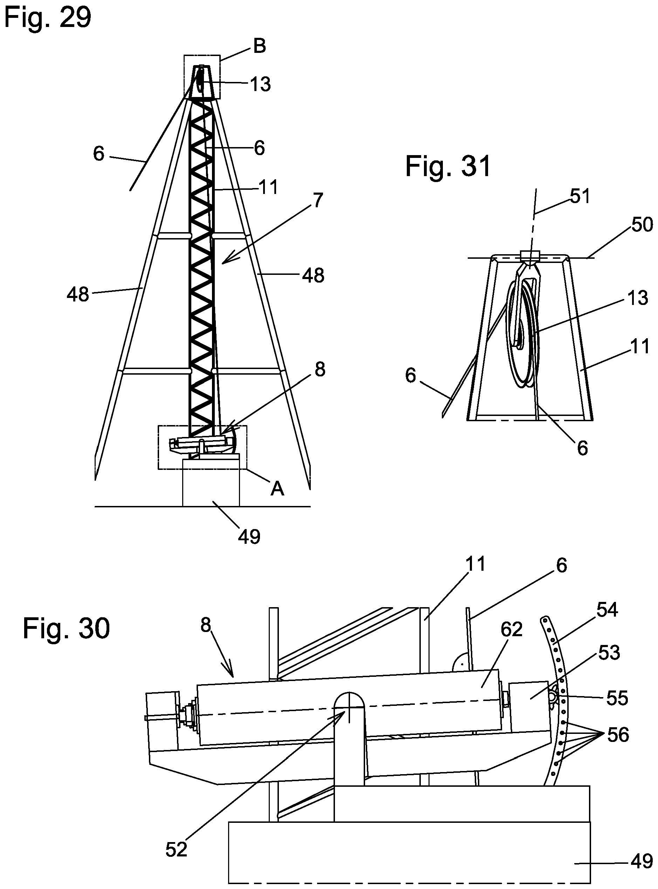

Um den Verschleiß an den Seilen und an den Seilwinden möglichst gering zu halten, ist es günstig, wenn das jeweilige Seil jeweils in einem rechten Winkel auf die Seilwinde aufläuft. Um dies zu gewährleisten, ist es generell günstig, wenn die Seilwinde schwenkbar gelagert ist. Diese schwenkbare Lagerung ist besonders dann von Vorteil, wenn, wie anhand des Ausführungsbeispiels in Fig. 26 gezeigt, das jeweilige Seil ohne Umlenkung direkt zum Lastenträger 4 läuft. Eine andere Gruppe von Ausführungsvarianten, bei der die schwenkbare Lagerung der jeweiligen Seilwinde günstig ist, ist dann, wenn die jeweilige Umlenkseilrolle relativ nah an der Seilwinde angeordnet ist. In den Fig. 29 und 30 ist beispielhaft anhand eines Positionierseils 6 und einer entsprechenden Positionierseilwinde 8 gezeigt, wie diese schwenkbare Lagerung der Seilwinde z.B. ausgeführt sein kann. Für eine Hubseilwinde 9, wie auch für eine Seilwinde eines Betätigungsseiles 16 kann dies in analoger Weise ausgeführt sein, ohne dass dies hier explizit gezeigt ist. Fig. 29 zeigt beispielhaft, wie die Positionierseilwinde 8 auf dem Sockel 49 und damit an der Aufhängevorrichtung 7 angeordnet ist. Das Positionierseil 6 läuft von der Positionierseilwinde 8 über die an der Mastspitze des Mastes 11 angeordnete Umlenkseilrolle 13 zum hier nicht dargestellten Lastenträger 4. Die Aufhängevorrichtung 7 kann z.B. wie in Fig. 27 und 28 gezeigt ausgeführt sein.

Fig. 30 zeigt den Bereich A aus Fig. 29 mit der Positionierseilwinde 8 etwas vergrößert. Dort ist gut zu sehen, dass die Positionierseilwinde 8 um die Schwenkachse 52 schwenkbar gelagert ist. Es handelt sich hier um eine motorisch angetriebene Verschwenkbarkeit. Hierzu ist die mittels Motor um ihre Längsachse drehbare Seiltrommel 62 der Positionierseilwinde 8, auf welche das Positionierseil 6 aufgewickelt und von dem das Positionierseil 6 abgewickelt wird, mittels eines Übersetzungsgetriebes 53 mit einem Ritzel 55 verbunden. Dieses Ritzel 55 greift in die Bolzen 56 eines gebogen ausgeführten Triebstocks 54 ein. Anstelle des gebogenen Triebstocks 54 könnte natürlich auch eine gebogene Zahnstange verwendet werden. Das Getriebe 53 sorgt dafür, dass das Ritzel 55 in einer auf die Auf- und Abwickelgeschwindigkeit angepassten Art und Weise für den jeweils optimalen Schwenkwinkel sorgt, sodass das Positionierseil 6 immer in einem mehr oder weniger rechten Winkel zur Seiltrommel 62 steht und so auf diese aufläuft und von dieser abläuft. Natürlich könnte diese motorisch angetriebene Schwenkbarkeit der Positionierseilwinde 8 bzw. Seilwinde allgemein auch anders realisiert werden. Z.B. könnte ein entsprechender Antriebsmotor direkt auf die Schwenkachse 52 aufgesetzt sein. Man könnte auch zum Antreiben des Ritzels 55 statt des Getriebes 53 einen separat angesteuerten Motor verwenden. Darüber hinaus gibt es natürlich noch zahlreiche weitere Möglichkeiten.

Fig. 31 zeigt nun noch beispielhaft die Mastspitze im Bereich B aus Fig. 29. Dargestellt ist hier, wie die Umlenkseilrolle 13 um die beiden orthogonalen Schwenkachsen 50 und 51 schwenkbar an der Aufhängevorrichtung 7 gelagert ist. Auch dies dient dazu, das jeweilige Seil, hier das Positionierseil 6, möglichst verschleißarm von der jeweiligen Seilwinde, also hier der Positionierseilwinde 8, zum Lastenträger 4 zu führen. Entsprechende Konstruktionen sind natürlich auch für entsprechende Umlenkseilrollen für das Hubseil 10 und/oder das Betätigungsseil 16 und gegebenenfalls auch für entsprechende Energieversorgungsleitungen 18 günstig.

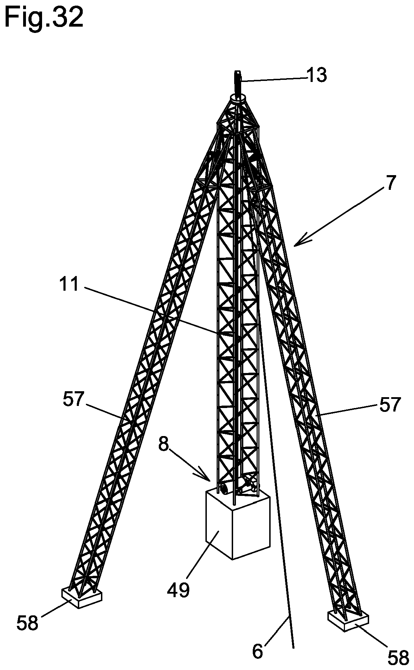

Grundsätzlich ist es so, dass die Aufhängevorrichtungen 7 natürlich zu ihrer Befestigung im Untergrund fix mit diesem verbunden werden können, z.B. über entsprechende Fundamente oder dergleichen. Insbesondere bei solchen Lastentransportanlagen 1, die an einem Ort nur für einen gewissen Zeitraum benötigt werden, ist es aber auch günstig, Lösungen bereitzustellen, bei denen die Aufhängevorrichtungen 7 gar nicht oder nur geringfügig im Untergrund verankert werden müssen. Fig. 32 zeigt ein weiteres Beispiel hierfür. Diese Aufhängevorrichtung 7 weist zwei in Form von Gittermasten ausgeführte Druckstützen 57 auf, welche mit ihrem jeweiligen Druckeinleitsockel 58 auf dem Untergrund frei aufgestellt oder nur gegen Verrutschen geringfügig befestigt werden müssen. Der hintere Mast 11 dieser Aufhängevorrichtung 7 dient in Fig. 32 rein als Zugstrebe 48. Um die nötigen Zugkräfte aufnehmen zu können, ist der Mast 11 mit einem Sockel 49 verbunden, dessen Gewicht so groß ist, dass es ausreicht, die auftretenden Zugkräfte ohne weitere Verankerung im Untergrund aufzunehmen. Im Sinne der besseren Transportierbarkeit kann es sich bei dem Sockel 49 auch um einen Hohlkörper handeln, der vor Ort mit einer Flüssigkeit wie z.B. Wasser oder anderem Material, z.B. Schüttgut zur Bereitstellung des notwendigen Gewichtes gefüllt wird. Natürlich kann anstelle dessen auch ein entsprechender Betonsockel oder dergleichen verwendet werden.

**Legende zu den Hinweisziffern:**

| | | | |
|---|---|---|---|
| 1 | Lastentransportanlage | 33 | Führung |
| 2 | Last | 34 | gemeinsamer Achsbolzen |
| 3 | Arbeitsraum | 35 | Oberfläche |
| 4 | Lastenträger | 36 | Vertikalebene |
| 5 | Lastaufnahmevorrichtung | 37 | weitere Ablenkseilrolle |
| 6 | Positionierseil | 38 | Hubseilfixierung |
| 7 | Aufhängevorrichtung | 39 | gemeinsamer |
| 8 | Positionierseilwinde | | Schnittpunkt |
| 9 | Hubseilwinde | 40 | Gabel |
| 10 | Hubseil | 41 | Greiferschaufel |
| 11 | Mast | 42 | Rolle |
| 12 | Turm | 43 | Auskopplung |
| 13 | Umlenkseilrolle | 44 | Verstrebung |
| 14 | Umlenkseilrolle | 45 | Querstrebe |
| 15 | Aktuator | 46 | Schwenkteller |
| 16 | Bestätigungsseil | 47 | Antriebsmotor |
| 17 | Ablenkseilrolle | 48 | Zugstrebe |
| 18 | Energieversorgungs- leitung | 49 | Sockel |
| | | 50 | Schwenkachse |
| 19 | Antriebsmotor | 51 | Schwenkachse |
| 20 | Mehrfach-Seilaufhängung | 52 | Schwenkachse |
| 21 | Seilverbinder | 53 | Getriebe |
| 22 | Schwenkachse | 54 | Triebstock |
| 23 | Schwenkachse | 55 | Ritzel |
| 24 | Schwenkachse | 56 | Bolzen |
| 25 | Schwenkachse | 57 | Druckstütze |
| 26 | Tragtraverse | 58 | Druckeinleitfläche |
| 27 | Einzel-Seilaufhängung | 59 | weitere Umlenkseilrolle |
| 28 | weitere Mehrfach- Seilaufhängung | 60 | Schwenkachse |
| | | 61 | weitere Umlenkseilrolle |
| 29 | weiterer Seilverbinder | 62 | Seiltrommel |
| 30 | Achsbolzen | 63 | Achsbolzen |
| 31 | Achsbolzen | 64 | Gabel |
| 32 | Achsbolzen | | |

## Patentansprüche

1. Lastentransportanlage (1) zum Transportieren einer Last (2) in einem Arbeitsraum (3), wobei die Lastentransportanlage (1) einen Lastenträger (4) und zumindest eine am Lastenträger (4) befestigte Lastaufnahmevorrichtung (5) zur Aufnahme der Last (2) und zumindest drei Positionierseile (6) und zumindest drei voneinander distanziert angeordnete Aufhängevorrichtungen (7) aufweist, wobei jede Aufhängevorrichtung (7) zumindest eine Positionierseilwinde (8) zum Auf- und Abwickeln eines der Positionierseile (6) aufweist und der Lastenträger (4) mittels der Positionierseile (6) an den Aufhängevorrichtungen (7) hängt, wobei der Lastenträger (4) und die daran befestigte Lastaufnahmevorrichtung (5) durch Betätigen der Positionierseilwinden (8) im und/oder über dem Arbeitsraum (3) verfahrbar sind, wobei der Lastenträger (4) zumindest eine Mehrfach-Seilaufhängung (20) aufweist, mittels der zumindest zwei der Positionierseile (6) über jeweils einen Seilverbinder (21) mit dem Lastenträger (4) verbunden sind, wobei jeder der Seilverbinder (21) um zumindest zwei orthogonal zueinander ausgerichtete Schwenkachsen (22, 23, 24, 25) an der Mehrfach-Seilaufhängung (20) schwenkbar gelagert ist ,**dadurch gekennzeichnet, dass** alle Schwenkachsen (22, 23, 24, 25) der Seilverbinder (21) sich in einem gemeinsamen Schnittpunkt (39) dieser Mehrfach-Seilaufhängung (20) schneiden.

2. Lastentransportanlage (1) nach Anspruch 1, **dadurch gekennzeichnet, dass** alle Positionierseile (6) mittels der Mehrfach-Seilaufhängung (20) über jeweils einen Seilverbinder (21) mit dem Lastenträger (4) verbunden sind, wobei jeder der Seilverbinder (21) um zumindest zwei orthogonal zueinander ausgerichtete Schwenkachsen (22, 23, 24, 25) an der Mehrfach-Seilaufhängung (20) schwenkbar gelagert ist und alle Schwenkachsen (22, 23, 24, 25) der Seilverbinder (21) sich in einem gemeinsamen Schnittpunkt (39) dieser Mehrfach-Seilaufhängung (20) schneiden.

3. Lastentransportanlage (1) nach Anspruch 1, **dadurch gekennzeichnet, dass** der Lastenträger (4) eine längserstreckte Tragtraverse (26) aufweist und die Mehrfach-Seilaufhängung (20) an der Tragtraverse (26), vorzugsweise an einem Ende der Tragtraverse (26), angeordnet ist.

4. Lastentransportanlage (1) nach Anspruch 3, **dadurch gekennzeichnet, dass** der Lastenträger (4) eine Einzel-Seilaufhängung (27) aufweist, mittels der ein einzelnes anderes der Positionierseile (6) mit dem Lastenträger (4) verbunden ist, wobei die Einzel-Seilaufhängung (27) von der Mehrfach-Seilaufhängung (20) beabstandet, vorzugsweise an einem der Mehrfach-Seilaufhängung (20) gegenüberliegenden Ende der Tragtraverse (26), an der Tragtraverse (26) angeordnet ist.

5. Lastentransportanlage (1) nach Anspruch 3, **dadurch gekennzeichnet, dass** der Lastenträger (4) zumindest eine weitere Mehrfach-Seilaufhängung (28) aufweist, mittels der zumindest zwei andere der Positionierseile (6) mit dem Lastenträger (4) verbunden sind, wobei die Mehrfach-Seilaufhängungen (20) voneinander beabstandet, vorzugsweise an einander gegenüberliegenden Enden der Tragtraverse (26), an der Tragtraverse (26) angeordnet sind.

6. Lastentransportanlage (1) nach Anspruch 5, **dadurch gekennzeichnet, dass** die zumindest zwei anderen der Positionierseile (6) über jeweils einen weiteren Seilverbinder (29) mittels der weiteren Mehrfach-Seilaufhängung (28) mit dem Lastenträger (4) verbunden sind, wobei jeder der weiteren Seilverbinder (29) um zumindest zwei orthogonal zueinander ausgerichtete Schwenkachsen an der weiteren Mehrfach-Seilaufhängung (28) schwenkbar gelagert ist und alle Schwenkachsen der weiteren Seilverbinder (29) sich in einem gemeinsamen Schnittpunkt dieser weiteren Mehrfach-Seilaufhängung (28) schneiden.

7. Lastentransportanlage (1) nach einem der Ansprüche 1 bis 6, **dadurch gekennzeichnet, dass** die Seilverbinder (21) jeweils als längserstreckte und/oder in sich starre Körper ausgebildet sind, und/oder dass vorgesehen ist, dass an einem ersten Ende des jeweiligen Seilverbinders (21) das jeweilige Positionierseil (6) befestigt ist und der Seilverbinder (21) mit einem zweiten, dem ersten Ende gegenüberliegenden, Ende an der Mehrfach-Seilaufhängung (20) schwenkbar gelagert ist.

8. Lastentransportanlage (1) nach einem der Ansprüche 1 bis 7, **dadurch gekennzeichnet, dass** zumindest zwei der Seilverbinder (21) mittels zumindest zwei, zueinander orthogonalen Achsbolzen (30, 31, 32) um die zumindest zwei orthogonal zueinander ausgerichteten Schwenkachsen (22, 23, 24, 25) schwenkbar an der Mehrfach-Seilaufhängung (20) gelagert sind, wobei vorzugsweise vorgesehen ist, dass der jeweilige Seilverbinder (21) an einem ersten der Achsbolzen (30) um eine erste der Schwenkachsen (22) schwenkbar gelagert ist und der erste der Achsbolzen (30) mit dem zweiten der Achsbolzen (31) um die zweite der Schwenkachsen (23) schwenkbar gelagert ist.

9. Lastentransportanlage (1) nach einem der Ansprüche 1 bis 7, **dadurch gekennzeichnet, dass** die Mehrfach-Seilaufhängung (20) für jeden der schwenkbar an ihr gelagerten Seilverbinder (21) eine kreisbogenabschnittsförmige Führung (33) aufweist, an der der jeweilige Seilverbinder (21) zum Verschwenken um eine erste der orthogonalen Schwenkachsen (22) geführt ist und die kreisbogenabschnittsförmigen Führungen (33) zum Verschwenken der jeweiligen Seilverbinder (21) um eine zweite der zueinander orthogonal ausgerichteten Schwenkachsen (23) um einen gemeinsamen Achsbolzen (34) schwenkbar sind.

10. Lastentransportanlage (1) nach einem der Ansprüche 1 bis 9, **dadurch gekennzeichnet, dass** die Lastentransportanlage (1) eine Hubseilwinde (9) und ein Hubseil (10) aufweist, wobei das Hubseil (10) von der Hubseilwinde (9) aufwickelbar und abwickelbar ist, und die Lastaufnahmevorrichtung (5) mittels des Hubseils (10) am Lastenträger (4) hängt und relativ zum Lastenträger (4) heb- und senkbar ist.

## Claims

1. A load transport system (1) for the transportation of a load (2) in a working space (3), wherein the load transport system (1) has a load carrier (4) and at least one load receiving device (5), secured to the load carrier (4), for receiving the load (2) and has at least three positioning lines (6) and at least three suspension devices (7) which are arranged at a distance from one another, wherein each suspension device (7) has at least one positioning winch (8) for the winding up and unwinding of one of the positioning lines (6) and the load carrier (4) hangs on the suspension devices (7) by means of the positioning lines (6), wherein the load carrier (4) and the load receiving device (5) secured thereto are movable, by actuation of the positioning winches (8), in and/or above the working space (3), wherein the load carrier (4) has at least one multiple line suspension means (20) by means of which at least two of the positioning lines (6) are connected to the load carrier (4) via a respective line connector (21), wherein each of the line connectors (21) is pivotably mounted on the multiple line suspension means (20) about at least two pivot axes (22, 23, 24, 25) oriented orthogonally to one another, **characterised in that** all pivot axes (22, 23, 24, 25) of the line connectors (21) intersect at a shared point of intersection (39) of this multiple line suspension means (20).

2. A load transport system (1) according to claim 1, **characterised in that** all positioning lines (6) are by means of the multiple line suspension means (20) connected to the load carrier (4) via a respective line connector (21), wherein each of the line connectors (21) is pivotably mounted on the multiple line suspension means (20) about at least two pivot axes (22, 23, 24, 25) oriented orthogonally to one another and all pivot axes (22, 23, 24, 25) of the line connectors (21) intersect at a shared point of intersection (39) of this multiple line suspension means (20).

3. A load transport system (1) according to claim 1, **characterised in that** the load carrier (4) has a longitudinally-extended carrying cross-member (26) and the multiple line suspension means (20) is arranged at the carrying cross-member (26), preferably at an end of the carrying cross-member (26).

4. A load transport system (1) according to claim 3, **characterised in that** the load carrier (4) has an individual line suspension means (27) by means of which an individual another one of the positioning lines (6) is connected to the load carrier (4), wherein the individual line suspension means (27) is arranged at the carrying cross-member (26) in a manner spaced apart from the multiple line suspension means (20), preferably arranged at an end, opposite the multiple line suspension means (20), of the carrying cross-member (26).

5. A load transport system (1) according to claim 3, **characterised in that** the load carrier (4) has at least one further multiple line suspension means (28) by means of which at least two other of the positioning lines (6) are connected to the load carrier (4), wherein the multiple line suspension means (20) are arranged at the carrying cross-member (26) in a manner spaced apart from one another, preferably arranged at opposite ends of the carrying cross-member (26).

6. A load transport system (1) according to claim 5, **characterised in that** the at least two other of the positioning lines (6) are by means of the further multiple line suspension means (28) connected to the load carrier (4) via a respective further line connector (29), wherein each of the further line connectors (29) is pivotably mounted on the further multiple line suspension means (28) about at least two pivot axes oriented orthogonally to one another and all pivot axes of the further line connectors (29) intersect at a shared point of intersection of this further multiple line suspension means (28).

7. A load transport system (1) according to any one of claims 1 to 6, **characterised in that** the line connectors (21) are in each case in the form of longitudinally-extended and/or inherently rigid bodies, and/or **in that** it is provided that the respective positioning line (6) is secured to a first end of the respective line connector (21) and the line connector (21) is pivotably mounted on the multiple line suspension means (20) by means of a second end opposite the first end.

8. A load transport system (1) according to any one of claims 1 to 7, **characterised in that** at least two of the line connectors (21) are, by means of at least two axle bolts (30, 31, 32) orthogonal to one another, pivotably mounted on the multiple line suspension means (20) about the at least two pivot axes (22, 23, 24, 25) oriented orthogonally to one another, wherein it is preferably provided that the respective line connector (21) is pivotably mounted on a first of the axle bolts (30) about a first of the pivot axes (22) and the first of the axle bolts (30) is pivotably mounted about the second of the pivot axes (23) together with the second of the axle bolts (31).

9. A load transport system (1) according to any one of claims 1 to 7, **characterised in that** the multiple line suspension means (20) has a guide means (33), in the form of a circular arc portion, for each of the line connectors (21) pivotably mounted on the multiple line suspension means (20), on which guide means (33) there is guided the respective line connector (21) for pivoting about a first of the orthogonal pivot axes (22) and the guide means (33) in the form of a circular arc portion are pivotable about a shared axle bolt (34) for pivoting of the respective line connector (21) about a second of the pivot axes (23) oriented orthogonally to one another.

10. A load transport system (1) according to any one of claims 1 to 9, **characterised in that** the load transport system (1) has a winch (9) and a hoisting line (10), wherein the hoisting line (10) can be wound up and unwound by the winch (9), and the load receiving device (5) hangs on the load carrier (4) by means of the hoisting line (10) and can be raised and lowered relative to the load carrier (4).

## Revendications

1. Installation de transport de charges (1) pour transporter une charge (2) dans un espace de travail (3), l'installation de transport de charge (1) étant muni d'un porte-charge (4) et d'au moins un dispositif de réception de charge (5) fixé au porte-charge (4) pour recevoir la charge (2), et d'au moins trois câbles de positionnement (6) et d'au moins trois dispositifs de suspension (7) disposés à distance les uns des autres, chaque dispositif de suspension (7) étant muni d'au moins un treuil de positionnement (8) pour enrouler et dérouler l'un des câbles de positionnement (6), et le porte-charge (4) étant suspendu aux dispositifs de suspension (7) au moyen des câbles de positionnement (6), le porte-charge (4) et le dispositif de réception de charge (5) qui y est fixé pouvant être déplacés dans et/ou au-dessus de l'espace de travail (3) en actionnant les treuils de positionnement (8), le porte-charge (4) étant muni d'au moins une suspension à câbles multiples (20) au moyen de laquelle au moins deux des câbles de positionnement (6) sont reliés au porte-charge (4) par un connecteur de câble (21) respectif, chacun des connecteurs de câble (21) étant monté sur la suspension à câbles multiples (20) en étant pivotant autour d'au moins deux axes de pivotement (22, 23, 24, 25) orientés orthogonalement entre eux, **caractérisée en ce que** tous les axes de pivotement (22, 23, 24, 25) des connecteurs de câble (21) se coupent en un point d'intersection commun (39) de cette suspension à câbles multiples (20).

2. Installation de transport de charges (1) selon la revendication 1, **caractérisée en ce que** tous les câbles de positionnement (6) sont reliés au porte-charge (4) au moyen de la suspension à câbles multiples (20) par un connecteur de câble (21) respectif, chacun des connecteurs de câble (21) étant monté sur la suspension à câbles multiples (20) en étant pivotant autour d'au moins deux axes de pivotement (22, 23, 24, 25) orientés orthogonalement entre eux, et tous les axes de pivotement (22, 23, 24, 25) des connecteurs de câble (21) se coupent en un point d'intersection commun (39) de cette suspension à câbles multiples (20).

3. Installation de transport de charges (1) selon la revendication 1, **caractérisée en ce que** le porte-charges (4) est muni d'une traverse porteuse (26) s'étendant longitudinalement, et la suspension à câbles multiples (20) est disposée sur la traverse porteuse (26), de préférence à une extrémité de la traverse porteuse (26).

4. Installation de transport de charges (1) selon la revendication 3, **caractérisée en ce que** le porte-charge (4) est muni d'une suspension à câble unique (27) au moyen de laquelle un seul autre des câbles de positionnement (6) est relié au porte-charge (4), la suspension à câble unique (27) étant disposée sur la traverse porteuse (26) à distance de la suspension à câbles multiples (20), de préférence à une extrémité de la traverse porteuse (26) opposée à la suspension à câbles multiples (20).

5. Installation de transport de charges (1) selon la revendication 3, **caractérisée en ce que** le porte-charge (4) est muni d'au moins une autre suspension à câbles multiples (28), au moyen de laquelle au moins deux autres des câbles de positionnement (6) sont reliés au porte-charge (4), les suspensions à câbles multiples (20) étant disposées à distance l'une de l'autre sur la traverse porteuse (26), de préférence à des extrémités opposées de la traverse porteuse (26).

6. Installation de transport de charges (1) selon la revendication 5, **caractérisée en ce que** les au moins deux autres des câbles de positionnement (6) sont reliés au porte-charge (4) par l'intermédiaire d'un autre connecteur de câble (29) respectif au moyen de l'autre suspension à câbles multiples (28), chacun des autres connecteurs de câble (29) étant monté sur l'autre suspension à câbles multiples (28) de manière à être pivotant autour d'au moins deux axes de pivotement orientés orthogonalement entre eux, et tous les axes de pivotement des autres connecteurs de câble (29) se coupant en un point d'intersection commun de cette autre suspension à câbles multiples (28).

7. Installation de transport de charges (1) selon l'une des revendications 1 à 6, **caractérisée en ce que** les connecteurs de câble (21) sont chacun conçus sous la forme de corps allongés et/ou rigides en soi, et/ou **en ce qu'**il est prévu de fixer le câble de positionnement (6) respectif à une première extrémité du connecteur de câble (21) respectif et de monter le connecteur de câble (21) pivotant sur la suspension à câbles multiples (20) par une deuxième extrémité opposée à la première extrémité.

8. Installation de transport de charges (1) selon l'une des revendications 1 à 7, **caractérisée en ce qu'au** moins deux des connecteurs de câble (21) sont montés sur la suspension à câbles multiples (20) au moyen d'au moins deux axes (30, 31, 32) orthogonaux entre eux en étant pivotant autour desdits au moins deux axes de pivotement (22, 23, 24, 25) orientés orthogonalement entre eux, le connecteur de câble respectif (21) étant de préférence monté sur un premier des axes (30) en étant pivotant autour d'un premier des axes de pivotement (22) et de monter le premier des axes (30) avec le deuxième des axes (31) en étant pivotant autour du deuxième des axes de pivotement (23).

9. Installation de transport de charges (1) selon l'une des revendications 1 à 7, **caractérisée en ce que** la suspension à câbles multiples (20) est munie, pour chacun des connecteurs de câbles (21) qui y sont montés pivotants, d'un guide en forme de section d'arc de cercle (33) sur lequel le connecteur de câble (21) respectif est guidé pour pivoter autour d'un premier des axes de pivotement orthogonaux (22), et les guides en forme de section d'arc de cercle (33) peuvent pivoter autour d'un axe commun (34) pour faire pivoter les connecteurs de câble (21) respectifs autour d'un deuxième des axes de pivotement (23) orientés orthogonalement entre eux.

10. Installation de transport de charges (1) selon l'une des revendications 1 à 9, **caractérisée en ce que** l'installation de transport de charge (1) est munie d'un treuil de levage (9) et un câble de levage (10), le câble de levage (10) pouvant être enroulé et déroulé par le treuil de levage (9), et le dispositif de réception de charge (5) étant suspendu au porte-charge (4) au moyen du câble de levage (10) et pouvant être levé et abaissé par rapport au porte-charge (4).
